# EUROPEAN PATENT SPECIFICATION

(11) **EP 4 019 291 B1**
(45) Date of publication and mention of the grant of the patent: **28.02.2024**
(21) Application number: 20856225.6
(22) Date of filing: 20.08.2020
(51) Int. Cl.: B29D 30/48, B29D 30/00, B60C 19/00, B60C 15/00, B60C 15/06

(54) **TIRE HAVING AN EMBEDDED ELECTRONIC COMPONENT AND METHOD OF MANUFACTURING THE SAME**
REIFEN MIT EINEM EINGEBETTEN ELEKTRISCHEN BAUTEIL UND VERFAHREN ZUR DESSEN HERSTELLUNG
PNEU AYANT UN COMPOSANT ÉLECTRONIQUE INCORPORÉ ET SON PROCÉDÉ DE FABRICATION

(30) Priority: 23.08.2019 JP 2019153246
(43) Date of publication of application: 29.06.2022
(73) Proprietor: Toyo Tire Corporation, Itami-shi, Hyogo 664-0847 (JP)
(72) Inventor: SUITA, Harunobu, Itami-Shi, Hyogo 664-0847 (JP)
(74) Representative: Müller-Boré & Partner Patentanwälte PartG mbB
(86) International application number: PCT/JP2020/031527
(87) International publication number: WO 2021/039603

(56) References cited:
- WO-A1-2018/104623
- JP-A- H05 169 931
- JP-A- 2008 265 750
- JP-A- 2016 049 920
- JP-A- 2016 539 047
- JP-U- H02 123 404
- KR-A- 20100 120 505
- US-A1- 2011 175 778
- US-B1- 8 977 422

## Description

### TECHNICAL FIELD

The present invention relates to a tire in which an electronic component is embedded and a manufacturing method of the tire.

### BACKGROUND ART

Conventionally, tires in which an electric component such as RFID is embedded within the rubber structure have been known. With such tires, by an RFID tag embedded in the tire and a reader as an external device carrying out communication, it is possible to perform production control of tires, usage history management, etc.

Patent Document 1: Japanese Unexamined Patent Application, Publication No. 2008-265750
US 8 977 422 B1 describes a system maintaining integrity of a vehicle, a wheel or a tire including a sensor mounted to the wheel or the tire and processor for receiving data from the sensor.
US 2011/175778 A1 describes a motor-vehicle tyre including a sidewall and a member with an electronic device, a generally substantially linear-shaped rectilinear wire antenna and means of electrical connection between the wire antenna and the electronic device.
WO 2018/104623 A1 describes a tire suitable for running flat comprising a crown, two sidewalls and two beads, a carcass reinforcement with at least one carcass ply anchored in each bead and a sidewall insert placed axially internally relative to at least the carcass ply, wherein the tire is equipped with an electronic device comprising at least one radiofrequency transponder placed axially in a zone of the tire bounded by at least of the beads and one of the sidewalls.

### DISCLOSURE OF THE INVENTION

### Problems to be Solved by the Invention

On the other hand, when embedding an RFID tag inside of a tire, since a level difference arises due to the RFID tag, there has been concern over uniformity deteriorating.

The present invention has been made taking account of the above-mentioned problem, and an object thereof is to provide a tire which can reduce deterioration in uniformity without a great level difference arising, even in the case of embedding an electronic component inside of the tire, and a manufacturing method of this tire.

### Means for Solving the Problems

The claimed invention is defined by the subject-matters of the independent claims. Additional embodiments are defined by the dependent claims.

A manufacturing method of a tire (for example, the tire 1, tire 2) according to a first aspect of the present invention, the tire including: bead cores (for example, the bead core 21), a bead filler (for example, the bead filler 22) extending to an outer side in a tire-radial direction of the bead core, a carcass ply (for example, the carcass ply 23) which extends from the bead core to another bead core, and is folded back around the bead core, and an electronic component (for example, the RFID tag 40), the method comprising the steps of: covering at least part of the electronic component by a coating rubber (for example, the coating rubber 43, protective member 430, coating rubber sheets 431, 432, annular rubber sheet 47); forming a recess (for example, the recess 22D, annular fitment recess 22E) of a shape corresponding to a shape of the coating rubber in the bead filler; and arranging a coating rubber sheet covering at least part of the electronic component in the recess of the bead filler.

According to a second aspect of the present invention, in the manufacturing method of the tire as described in the first aspect, the tire may further include a rubber sheet (for example, the rubber sheet 37) which covers a folding end (for example, the folding end 25A) of the carcass ply which was folded back, the method may further include a step of covering the coating rubber disposed in the recess of the bead filler by the rubber sheet.

According to a third aspect of the present invention, the manufacturing method of the tire as described in the first or second aspect may further include a step of curving the recess formed in the bead filler, prior to the step of arranging.

According to a fourth aspect of the present invention, the manufacturing method of the tire as described in the first or second aspect may further include a step of curving the recess formed in the bead filler, after the step of arranging.

A tire according to a fifth aspect of the present invention includes: bead cores; a bead filler extending to an outer side in a tire-radial direction of the bead core; a carcass ply extending from the bead core to another bead core, and folded back around the bead core; an electronic component; coating rubber which covers at least part of the electronic component; and a rubber sheet which covers a folding end of the carcass ply which is folded back, in which a recess is formed in the bead filler, the coating rubber which covers at least part of the electronic component is disposed in the recess of the bead filler, and the coating rubber disposed in the recess of the bead filler is covered by the rubber sheet.

### Effects of the Invention

According to the present invention, it is possible to provide a tire which can reduce deterioration in uniformity without a great level difference arising, even in the case of embedding an electronic component inside of the tire, and a manufacturing method of this tire.

### BRIEF DESCRIPTION OF THE DRAWINGS

FIG. 1 is a view showing a half section in a tire-width direction of a tire according to a first embodiment of the present invention;
FIG. 2 is a partially enlarged cross-sectional view of a tire according to the first embodiment of the present invention;
FIG. 3 is a view showing results of an in-plane distribution simulation of strain energy in a case of applying load to the tire;
FIG. 4A is a view showing an RFID tag covered by a coating rubber sheet, in a tire according to the first embodiment of the present invention;
FIG. 4B is a view showing along the cross section b-b in FIG. 4A;
FIG. 4C is a view showing along the cross section c-c in FIG. 4A;
FIG. 5 is a partially enlarged cross-sectional view of the periphery of an RFID tag in the tire according to the first embodiment of the present invention;
FIG. 6A is a view showing a manufacturing process of a bead filler of the tire according to the first embodiment of the present invention;
FIG. 6B is a view showing a manufacturing process of a bead filler of the tire according to the first embodiment of the present invention;
FIG. 6C is a view showing a manufacturing process of a bead filler of the tire according to the first embodiment of the present invention;
FIG. 7 is a view showing a state pasting an RFID tag and rubber sheet to the bead filler in the tire according to the first embodiment of the present invention;
FIG. 8A is a view showing an RFID tag covered by a coating rubber in a modified example of the first embodiment of the present invention;
FIG. 8B is a view showing a cross section along the line b-b in FIG. 8A;
FIG. 8C is a view showing a cross section along the line c-c in FIG. 8A;
FIG. 9 is a partially enlarged cross-sectional view in the periphery of an RFID tag of a modified example of the first embodiment of the present invention;
FIG. 10 is a partially enlarged cross-sectional view in the periphery of an RFID tag of a modified example of the first embodiment of the present invention;
FIG. 11 is a partially enlarged cross-sectional view of a tire according to a modified example of the first embodiment of the present invention;
FIG. 12 is a partially enlarged cross-sectional view of a tire according to a second embodiment of the present invention;
FIG. 13 is a view showing a cross section prior to interposing the RFID tag by coating rubber sheets, in a case of not filling rubber into a spring antenna;
FIG. 14 is a view showing a cross section after interposing the RFID tag by coating rubber sheets, in a case of not filling rubber into a spring antenna;
FIG. 15 is a view showing a cross section after interposing the RFID tag by coating rubber sheets, in a case of not advance filling rubber into a spring antenna;
FIG. 16 is a view showing the RFID tag prior to filling rubber into the spring antenna, in a tire according to a third embodiment of the present invention;
FIG. 17 is a view showing the RFID tag after filling rubber into the spring antenna in the tire according to the third embodiment of the present invention;
FIG. 18 is a view showing an RFID tag prior to interposing by coating rubber sheets, in the tire according to the third embodiment of the present invention;
FIG. 19 is a view showing an RFID tag interposed by coating rubber sheets, in the tire according to the third embodiment of the present invention;
FIG. 20 is a view showing a half section in a tire-width direction of a tire according to a fourth embodiment of the present invention;
FIG. 21 is a partially enlarged cross-sectional view of the tire according to the fourth embodiment of the present invention;
FIG. 22 is a view showing a rubber sheet integrally provided with the RFID tag of the tire according to the fourth embodiment of the present invention;
FIG. 23 is a partially enlarged cross-sectional view in the periphery of the RFID tag of the tire according to the fourth embodiment of the present invention;
FIG. 24 is a partially enlarged cross-sectional view in the periphery of the RFID tag in a modified example of the fourth embodiment of the present invention; and
FIG. 25 is a partially enlarged cross-sectional view in the periphery of the RFID tag in a modified example of the fourth embodiment of the present invention.

### PREFERRED MODE FOR CARRYING OUT THE INVENTION

### <First Embodiment>

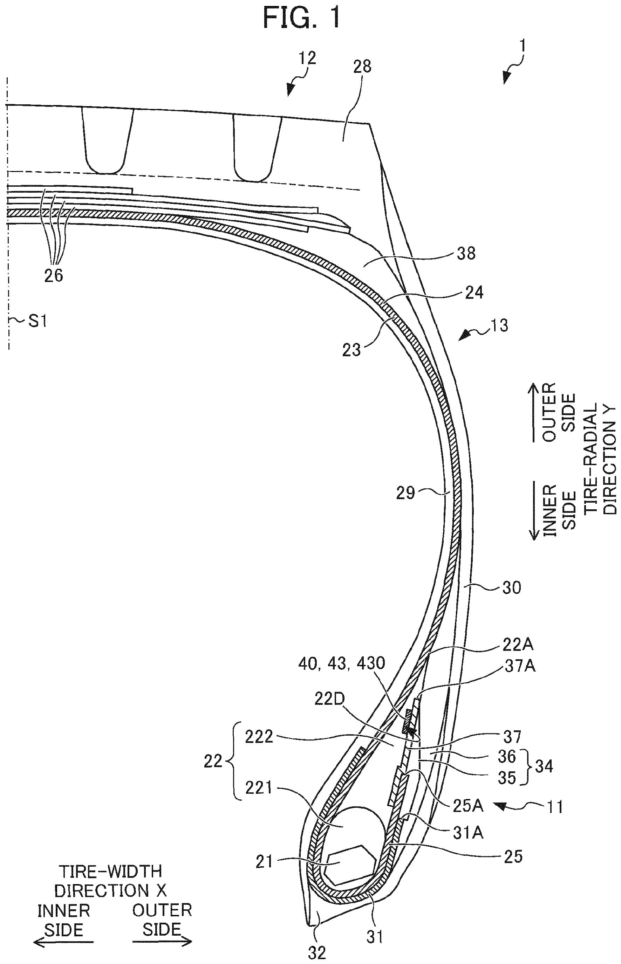

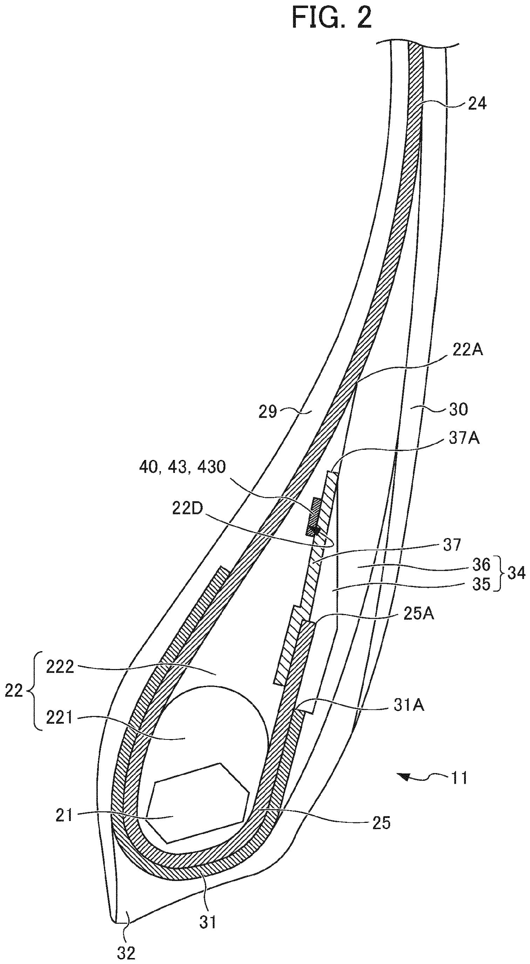

Hereinafter, a first embodiment of the present invention will be explained while referencing the drawings. FIG. 1 is a view showing a half section in a tire-width direction of a tire 1 according to the present embodiment. The basic structure of the tire is left/right symmetric in the cross section of the tire-width direction; therefore, a cross-sectional view of the right half is shown herein. In the drawings, the reference symbol Sl is the tire equatorial plane. The tire equatorial plane S1 is a plane orthogonal to the tire rotation axis, and is positioned in the center of the tire-width direction. Herein, tire-width direction is a direction parallel to the tire rotation axis, and is the left/right direction of the paper plane of the cross-sectional view in FIG. 1. In FIG. 1, it is illustrated as the tire-width direction X. Then, inner-side of tire-width direction is a direction approaching the tire equatorial plane S1, and is the left side of the paper plane in FIG. 1. Outer side of tire-width direction is a direction distancing from the tire equatorial plane S1, and is the right side of the paper plane in FIG. 1. In addition, tire-radial direction is a direction perpendicular to the tire rotation axis, and is the vertical direction in the paper plane of FIG. 1. In FIG. 1, it is illustrated as the tire-radial direction Y. Then, outer-side of tire-radial direction is a direction distancing from the tire rotation axis, and is the upper side of the paper plane in FIG. 1. Inner-side of tire-radial direction is a direction approaching the tire rotation axis, and is the lower side of the paper plane in FIG. 1. The same also applies to FIGS. 2, 5, 9 to 12, 20, 21 and 23 to 25.

The tire 1 is a tire for trucks and buses, for example, and includes a pair of beads 11 provided at both sides in the tire width direction, tread 12 forming a contact patch with the road surface, and a pair of sidewalls 13 which extends between the pair of beads 11 and the tread 12.

The bead 11 includes an annular bead core 21 formed by wrapping around several times bead wires made of metal coated with rubber, and a bead filler 22 of tapered shape extending to the outer side in the tire-radial direction of the bead core 21. The bead filler 22 is configured by a first bead filler 221 which covers the outer circumference of the bead core 21, and a second bead filler 222 which is arranged on the outer side in the tire-radial direction of the first bead filler 221. The second bead filler 222 is configured from rubber with a modulus higher than an inner liner 29 and side wall rubber 30 described later. Then, the first bead filler 221 is configured from rubber of an even higher modulus than the second bead filler 222. It should be noted that the first bead filler 221 may be a form not covering the outer circumference of the bead core 21, if at least a part thereof is arranged on the outer side in the tire-radial direction of the bead core 21. In addition, the bead filler 22 may be formed from rubber of one type. In other words, it may not necessarily be divided into the first bead filler 221 and second bead filler 222. The bead core 21 is a member which plays a role of fixing a tire filled with air to the rim of a wheel which is not illustrated. The bead filler 22 is a member provided in order to raise the rigidity of the bead peripheral part and to ensure high maneuverability and stability.

A carcass ply 23 constituting a ply serving as the skeleton of the tire is embedded inside of the tire 1. The carcass ply 23 extends from one bead core to the other bead core. In other words, it is embedded in the tire 1 between the pair of bead cores 21, in a form passing through the pair of side walls 13 and the tread 12. As shown in FIG. 1, the carcass ply 23 includes a ply body 24 which extends from one bead core to the other bead core, and extends between the tread 12 and bead 11, and a ply folding part 25 which is folded around the bead core 21. Herein, a folding end 25A of the ply folding part 25 is positioned more to an inner side in the tire-radial direction than a tire-radial direction outside end 22A of the bead filler 22. The carcass ply 23 is configured by a plurality of ply cords extending in a tire-width direction. In addition, a plurality of ply cords is arranged side by side in a tire circumferential direction. This ply cord is configured by a metal steel cord, or an insulated organic fiber cord such as polyester or polyamide, or the like, and is covered by rubber.

In the tread 12, a plurality of layers of steel belts 26 is provided in the outer side in the tire radial direction of the carcass ply 23. The steel belt 26 is configured by a plurality of steel cords covered by rubber. By providing the steel belts 26, the rigidity of the tire is ensured, and the contact state of the road surface with the tread 12 improves. In the present embodiment, although four layers of steel belts 26 are provided, the number of layered steel belt 26 is not limited thereto.

The tread rubber 28 is provided at the outer side in the tire-radial direction of the steel belt 26. A tread pattern (not illustrated) is provided to the outer surface of the tread rubber 28, and this outer surface serves as a contact surface which contacts with the road surface.

In the vicinity of the outer side in the tire-width direction of the tread 12, in a region between the carcass ply 23, and the steel belts 26 / tread rubber 28, a shoulder pad 38 is provided. This shoulder pad 38 extends until a region of the outer side in the tire-radial direction of the side wall 13, and part thereof forms an interface between side wall rubber 30 described later. In other words, in the region of the outer side in the tire-radial direction of the side wall 13, a part of the shoulder pad 38 is present on the inner side in the tire width direction of the side wall rubber 30. The shoulder pad 38 consists of a rubber member having cushioning, and exhibits a cushion function between the carcass ply 23 and steel belt 26. In addition, since the shoulder pad 38 consists of rubber having a characteristic of low heat buildup, it is possible to suppress heat generation effectively, by extending until the side wall 13.

In the bead 11, sidewall 12 and tread 13, an inner liner 29 as a rubber layer constituting an inner wall surface of the tire 1 is provided to the tire inner cavity side of the carcass ply 23. The inner liner 29 is configured by air permeation resistant rubber, whereby the air inside the tire inner cavity is prevented from leaking to outside.

In the side wall 13, the side wall rubber 30 constituting the outer wall surface of the tire 1 is provided to the outer side in the tire-width direction of the carcass ply 23. This side wall rubber 30 is a portion which bends the most upon the tire exhibiting a cushioning action, and usually flexible rubber having fatigue resistance is adopted therein.

On the inner side in the tire radial direction of the carcass ply 23 provided around the bead core 21 of the bead 11, a chafer 31 serving as a reinforcement ply is provided so as to cover at least part of the carcass ply 23. The chafer 31 also extends to the outer side in the tire-width direction of the ply folding part 25 of the carcass ply 23, and an end part 31A of this chafer 31 is positioned more to the inner side in the tire-width direction than the folding end 25A of the carcass ply 23. This chafer 31 is a metal reinforcement layer configured by metal steel cords, and is covered by rubber.

Rim strip rubber 32 is provided at the inner side in the tire-radial direction of the chafer 31. This rim strip rubber 32 is arranged along the outer surface of the tire, and connects with the side wall rubber 30. This rim strip rubber 32 and side wall rubber 30 are rubber members constituting the outer surface of the tire.

Then, at the outer side in the tire-radial direction of the end part 31A of the chafer 31, which is at the outer side in the tire-width direction of the folding part 25 of the carcass ply 23 and bead filler 22, a first pad 35 is provided. This first pad 35 is provided to the outer side in the tire-width direction of at least the folding end 25A of the carcass ply 23. The outer side in the tire-radial direction of the first pad 35 is formed so as to taper as approaching the outer side in the tire-radial direction.

Furthermore, a second pad 36 is provided so as to cover the outer side in the tire-width direction of the first pad 35. In more detail, the second pad 36 is provided so as to cover the outer side in the tire-width direction of part of the chafer 31, the first pad 35, part of the second bead filler 222, and part of the ply body 24 of the carcass ply 23. Then, the side-wall rubber 30 is arranged at the outer side in the tire-width direction in a region of the outer side in the tire-radial direction of the second pad 36, and the rim strip rubber 32 is arranged at an outer side in the tire-width direction in a region on the inner side in the tire-radial direction of the second pad 36. In other words, the second pad 36 is provided between a first pad 35, etc. and the rim strip rubber 32 and sidewall rubber 30 which are members constituting the outer surface of the tire (tire-width direction outside surface constituting rubber members). In other words, the second pad 36 is provided on a tire inner cavity side of the rim strip rubber 32 and sidewall rubber 30, which are tire-width direction outside surface constituting rubber members. It should be noted that the tire-radial direction outside end 36A of the second pad 36 is preferably arranged more to the inner side in the tire-radial direction than a portion which is the tire widest part of the sidewall 13, as shown in FIG. 1. Then, the tire-radial direction outside end 36A of this second pad 36 is formed so as to taper as approaching the outer side in the tire-radial direction.

Herein, the first pad 35 and second pad 36 constitute the pad member 34, and this pad member 34 is configured by rubber of higher modulus than the modulus of the tire-radial direction outside portion of the bead filler 22 filler (second bead filler 222. In more detail, the second pad 36 is configured by rubber of higher modulus than the second bead filler 222, and the first pad 35 is configured by rubber of even higher modulus than the second pad 36. The first pad 35 and second pad 36 have a function of mitigating sudden distortion caused by the local rigidity point of change at the folding end 25A of the carcass ply 23 and the end part 31A of the chafer 31.

The rubber sheet 37 serving as a reinforced rubber sheet is arranged in the vicinity of the folding end 25A of the carcass ply 23, between the bead filler 22 and pad member 34. The rubber sheet 37 is arranged so as to cover the folding end 25A of the carcass ply 23 from the inner side in the tire-width direction. The rubber sheet 37 is configured from rubber of higher modulus than the second bead filler 222. More preferably, it is configured from rubber of a modulus substantially equal to that of the first pad 35.

Generally, at the folding end 25A of the carcass ply 23, stress tends to concentrate. However, by providing the rubber sheet 37 serving as the aforementioned reinforced rubber sheet, it becomes possible to effectively suppress the concentration of stress. It should be noted that, although the pad member 34 is configured from the first pad 35 and second pad 36 in the present embodiment, the pad member 34 may be configured from one member. However, as mentioned above, by configuring the pad member 34 from the first pad 35 and second pad 36, and further adopting a configuration arranging the rubber sheet 37, it is possible to more effectively suppress the concentration of stress.

It should be noted that the position of the tire-radial direction outside end 37A of the rubber sheet 37 in the present embodiment is located more to the outer side in the tire-radial direction than the tire-radial direction outside end 22A of the bead filler 22. However, the position of the tire-radial direction outside end 37A of the rubber sheet 37 may be made to substantially match the position of the tire-radial direction outside end 22A of the bead filler 22. It should be noted that the rubber sheet 37 preferably adopts a form arranged so as to cover the folding end 25A of the carcass ply 23 from the inner side in the tire-width direction as shown in FIG. 1; however, a configuration covering the folding end 25A of the carcass ply 23 from the outer side in the tire-width direction may be adopted. Even in this case, it is possible to mitigate the concentration of stress. It should be noted that, considering the workability of the process of arranging the rubber sheet 37, and suppressing the influence on the thickness at the periphery of the bead 11, it is more preferable to use the rubber sheet 37 of substantially constant thickness such as that shown in FIGS. 1 and 2 as the rubber sheet 37, and establish a state covering the folding end 25A of the carcass ply 23 from either one of the tire-width direction inner side or tire-width direction outer side, by such a rubber sheet 37.

An RFID tag 40 is embedded as an electrical component in the tire 1 of the present embodiment. The RFID tag 40 is a passive transponder equipped with an RFID chip and an antenna for performing communication with external equipment, and performs wireless communication with a reader (not illustrated) serving as the external equipment. As the antenna, a coil-shaped spring antenna, plate-shaped antenna, and various types of rod-shaped antennas can be used. For example, it may be an antenna formed by printing a predetermined pattern on a flexible substrate. The antenna is established at an antenna length optimized according to the frequency band, etc. to be used. In a storage part inside the RFID chip, identification information such as a manufacturing number and part number is stored.

FIG. 2 is an enlarged cross-sectional view showing the vicinity of an embedded part of the RFID tag 40 in the tire 1 of FIG. 1. As shown in FIGS. 1 and 2, the recess 22D is formed in the bead filler 22, and the RFID tag 40 (including a state in which at least part is covered by the coating rubber 43 described later) is arranged in the recess 22D of the bead filler 22. Then, the RFID tag 40 arranged in the recess 22D of the bead filler 22 is covered by the rubber sheet 37.

It should be noted that, if establishing the modulus of the second pad 36 as a reference, the side-wall rubber 30 is preferably established with a modulus of 0.4 to 0.6 times that of the second pad 36. In addition, the first pad 35 is preferably established with a modulus of 1.1 to 1.2 times that of the second pad 36. In addition, the second bead filler 222 is preferably established with a modulus of 0.7 to 0.8 times that of the second pad. By establishing such a modulus, it is possible to keep a balance of flexibility as a tire and rigidity in the vicinity of the bead 11.

Then, the rubber sheet 37 is preferably established with a modulus 1.1 times to 1.2 times that of the second pad 36. In other words, the modulus of the rubber sheet 37 preferably is established with substantially equal modulus to a portion of the pad member 34 at least covering the folding end 25A of the carcass ply 23 (first pad 35).

In this way, the modulus of the portion of the pad member 34 (first pad 35) at least covering the folding end 25A of the carcass ply 23 and the modulus of the rubber sheet 37 both are higher than the modulus of the rubber member in the surrounding thereof. By adopting a configuration interposing the folding end 25A of the carcass ply 23 by rubber members of high modulus in this way, it becomes possible to effectively suppress the concentration of stress in this portion. Then, since the RFID tag 40 is arranged at the rubber sheet 37 which is a rubber member of high modulus, the deformation amount of the RFID tag 40 becomes smaller even in a case of the tire 1 bending. Consequently, it is possible to appropriately protect the RFID tag 40. It should be noted that, in a case of configuring the pad member 34 from one member, it is preferable for the modulus of the pad member 34 to be set higher than at least the modulus of the side-wall rubber 30. More preferably, the modulus of the pad member 34 is set to be higher than the modulus of the side-wall rubber 30 and second bead filler 222. It should be noted that the modulus of the pad member 34 may be set equal to, or lower than, the modulus of the rubber sheet 37. It should be noted that the modulus indicates 100% elongation modulus (M100) under a 23°C atmosphere, measured in accordance with "3.7 stress at a given elongation, S" of JIS K6251:2010.

Herein, normally, in a case of the boundary surface of two substances being a surface extending from the folding end 25A of the carcass ply 23, distortion tends to occur at this surface. However, in the present embodiment, since the rubber sheet 37 is arranged so as to cover the folding end 25A of the carcass ply 23, more to the outer side in the tire-radial direction than the folding end 25A of the carcass ply 23 becomes a portion which hardly receives the influence of distortion.

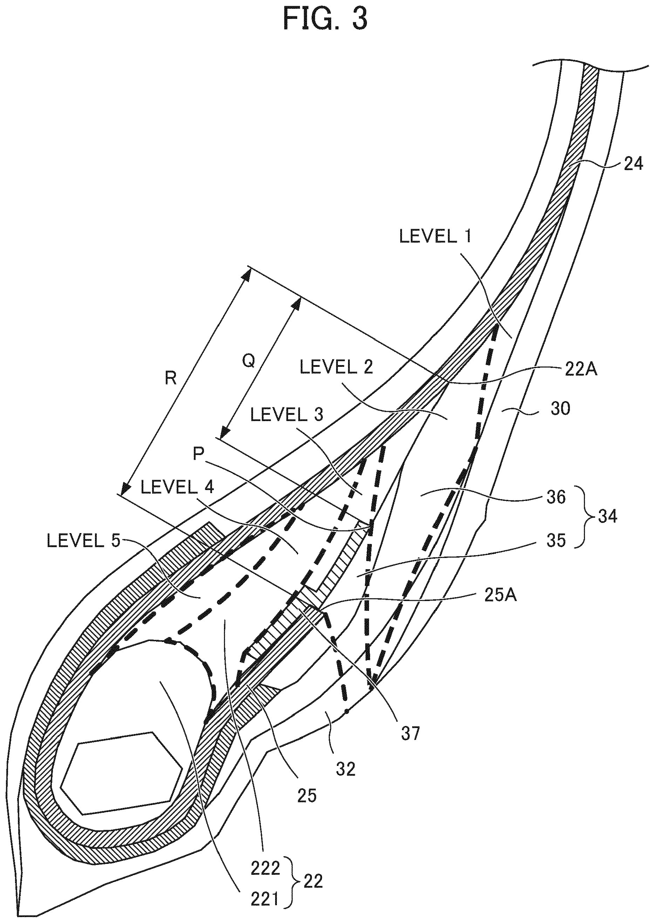

FIG. 3 is a view showing the results of in-plane distribution simulation of strain energy, in a case of assembling the tire to a rim, and applying 100% load. The enlarged cross-sectional view shown in FIG. 3 displays by dividing the region in five, according to the magnitude of the strain energy. Herein, a region having the highest strain energy is defined as level 5, a region having high strain energy is defined as level 4, a region in which the strain energy somewhat declined is defined as level 3, a region in which the strain energy further declined is defined as level 2, and the region in which the strain energy declined the most is defined as level 1. FIG. 3 displays by dividing the regions with bold dotted lines as the boundary.

At the boundary surface between the bead filler 22 and pad member 34 and the vicinity thereof, the region more to the outer side in the tire-radial direction than the folding end 25A of the carcass ply 23 becomes mostly level 2 ~ 3, and the strain energy is small. Consequently, this region becomes a preferred region upon arranging the RFID tag 40. It should be noted that, in the present embodiment (refer to FIG. 2), although the rubber sheet 37 extends more to the outer side in the tire-radial direction than this simulation model, since the basic configurations of arranging and reinforcing the rubber sheet 37 are the same, the strain energy in the vicinity of the rubber sheet 37 becomes equal to FIG. 3, or smaller.

It should be noted that, in the tire-width direction cross-sectional view shown in FIGS. 1 to 3, when defining the distance from the tire-radial direction outside end 22A of the bead filler 22 until the folding end 25A of the carcass ply 23 as a reference distance R, the RFID tag 40 is preferably arranged within a region (region Q) of range Q from the position of the tire-radial direction outside end 22A of the bead filler 22 until a position P (refer to FIG. 3) which is 60% of the reference distance towards the folding end 25A of the carcass ply 23. Within the region of this range Q, the strain energy of the boundary surface between the bead filler 22 and the pad member 34 and the vicinity thereof become mostly level 2, and upon arranging the RFID tag 40, becomes a very preferable region. Consequently, it is preferable to extend the rubber sheet 37 until this region, and arrange the RFID tag 40 in this region.

It should be noted that, so long as within the region of this range Q, it will be a position distanced a certain extent from the bead core 21 made of metal, which has a possibility of adversely affecting communication. Herein, the bead core 21 is formed in a ring shape by winding in layers of metal bead wires, and thus is a metal member having a particularly high possibility of adversely affecting communication. In addition, the vicinity of the rubber sheet 37 also hardly receives influence relative to external damage, due to being a position distanced a certain extent from the outer surface of the tire 1. Furthermore, since the outer side in the tire-width direction is protected by the pad member 34 having high modulus, it hardly receives influence relative to external damage also from this point.

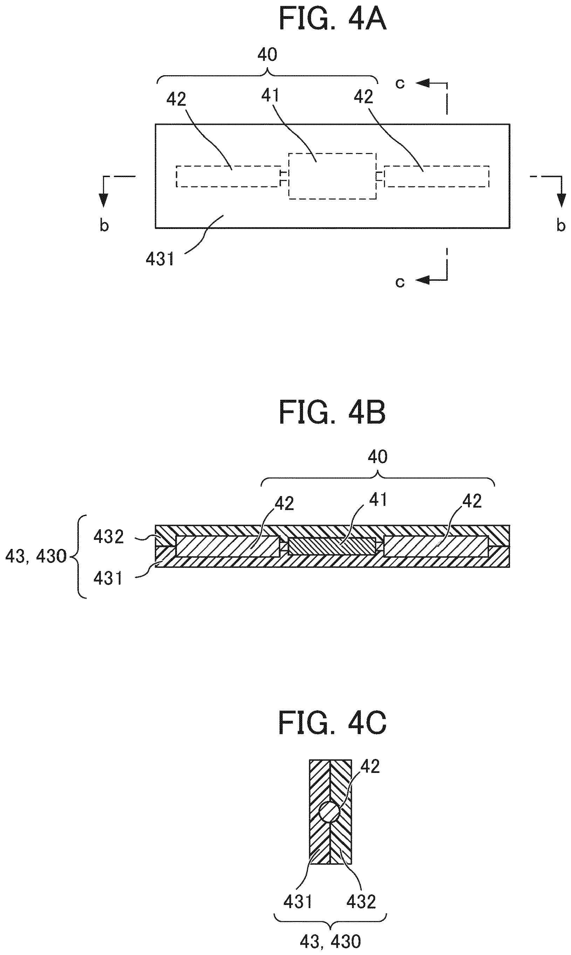

Herein, the RFID tag 40 has at least part thereof covered by the coating rubber 43. In the present embodiment, the entirety is covered by two coating rubber sheets 431, 432 constituting the coating rubber 43. Herein, due to the coating rubber 43 (coating rubber sheets 431, 432) of the present embodiment covering the RFID tag 40 and also having a function of protecting the RFID tag 40, the coating rubber 43 is also called as a protective member 430 in the present embodiment. Next, the coating rubber 43 (protective member 430) will be explained while referencing FIGS. 4A to 4C. FIG. 4A is a view showing the RFID tag 40 in which the entirety is covered by the coating rubber sheets 431, 432 constituting the protective member 430. In FIG. 4A, the RFID tag 40 is covered and hidden by the coating rubber sheet 431. FIG. 4B is a cross-sectional view along the line b-b in FIG. 4A, and FIG. 4C is a cross-sectional view along the line c-c in FIG. 4A.

The RFID tag 40 includes an RFID chip 41 and antenna 42 for performing communication with external equipment. As the antenna 42, a coil-shaped spring antenna, plate-shaped antenna, and various types of rod-shaped antennas can be used. When considering the communicability and flexibility, a coil-shaped spring antenna is the most preferable.

The protective member 430 is configured by the two coating rubber sheets 431, 432 which sandwich to protect the RFID tag 40.

As the rubber employed in the protective member 430, rubber of lower modulus than at least the rubber sheet 37 is used. For example, the coating rubber sheets 431, 432 constituting the protective member 430 are preferably established with a modulus of 0.5 to 0.8 times that of the rubber sheet 37. However, in order to impart a certain level of strength, it is preferable to use rubber of higher modulus than the side-wall rubber 30. More preferably, it is preferable to establish with a modulus substantially equal to the second bead filler 222. Alternatively, rubber of lower modulus than the second bead filler 222 may be used in consideration of effectively absorbing the deformation amount.

As mentioned above, by arranging the RFID tag 40 near the rubber sheet 37 having high modulus, even in the case of the tire 1 bending, it becomes possible to suppress the deformation amount at the peripheral part of the RFID tag 40. Furthermore, by covering the RFID tag 40 by the protective member 430 having low modulus, the protective member 430 becomes able to absorb deformation, so that deformation of the rubber sheet 37 does not directly transmit to the RFID tag 40.

In addition, the protective member 430 may be configured from a short-fiber filler mixed rubber. As the short-fiber filler, for example, it is possible to use insulating short fibers like organic short fibers such as aramid short fibers and cellulose short fibers; inorganic short fibers such as ceramic short fibers as in alumina short fiber, and glass short fiber. By mixing such short-fiber fillers into rubber, it is possible to raise the strength of the rubber. In addition, as the protective member 430, a coating rubber sheet in the vulcanized state may be used. The coating rubber sheet in a vulcanized state does not plastically deform as would raw rubber, and thus can appropriately protect the RFID tag 40.

In addition, as the protective member 430, an organic fiber layer from polyester fibers or polyamide fibers may be provided. It is also possible to embed an organic fiber layer in the two coating rubber sheets 431, 432.

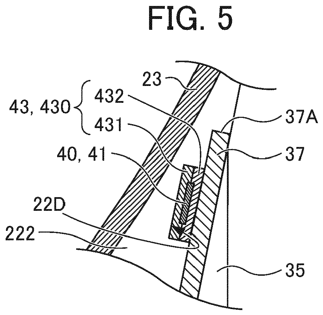

FIG. 5 is a partially enlarged view showing the RFID tag 40 covered by the coating rubber sheets 431, 432 constituting the coating rubber 43 (protective member 430) in the tire 1, and the vicinity thereof. The coating rubber 43 is inserted in the recess 22D of the second bead filler 222, so that one surface of either one of the coating rubber sheets 431, 432 makes contact with the bottom of the recess 22D of the bead filler 22 (second bead filler 222 in present embodiment), for example. Then, the surface of the other of the coating rubber sheets 431, 432 is covered by the rubber sheet 37. In this way, in the case of a situation such that inserts the coating rubber 43 in the recess 22D, the coating rubber 43 configures a fitment retaining member integrally provided with the RFID tag 40 as an electronic component, and the recess 22D of the second bead filler 222 configures a fitment recess which fits with the fitment retaining member. This fitment retaining member and fitment recess are corresponding shapes, and when both are fitted, air pockets hardly occur.

Next, a manufacturing process of the tire 1 will be explained. Regarding the side of the RFID tag 40, a coating process for covering the RFID tag 40 by the coating rubber 43 is conducted.

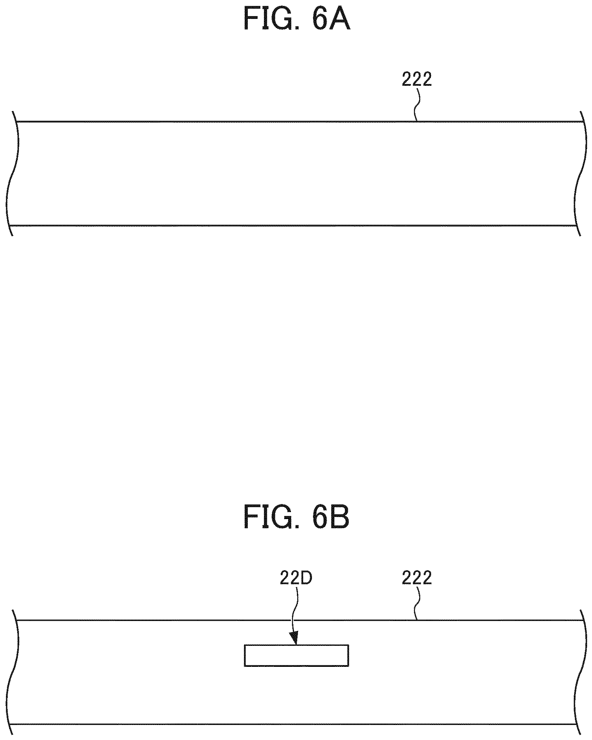

Regarding the side of the bead filler 22, the second bead filler 222 configuring the bead filler 22 is molded as a straight elongated rubber member as shown in FIG. 6A by extrusion molding, for example. Then, after extrusion molding, a recess forming process of forming the recess 22D of a shape corresponding to the shape of the coating rubber 43 covering the RFID tag 40 is conducted on the second bead filler 222, which is still a straight rubber member, as shown in FIG. 6B. In the present embodiment, this recess 22D is a recess of substantially rectangular shape having a predetermined depth. The process of forming this recess 22D is preferably performed immediately after extrusion molding, which is a state in which the rubber member configuring the second bead filler 222 is still raw rubber of high temperature. As the method of forming the recess after extrusion molding, it is possible to adopt various methods such as shaving, compression molding and thermoforming. In addition, as the recess of substantially rectangular shape, a recess of oval shape may be adopted, for example. After this recess formation step, an arrangement step of arranging the coating rubber 43 which was coated over the RFID tag 40 described later in the recess 22D of the second bead filler 222 is performed. It should be noted that, regarding the coating step of covering the RFID tag 40 by the coating rubber 43, and the recess formation step of forming the recess 22D in the second bead filler 222, either step may be performed first.

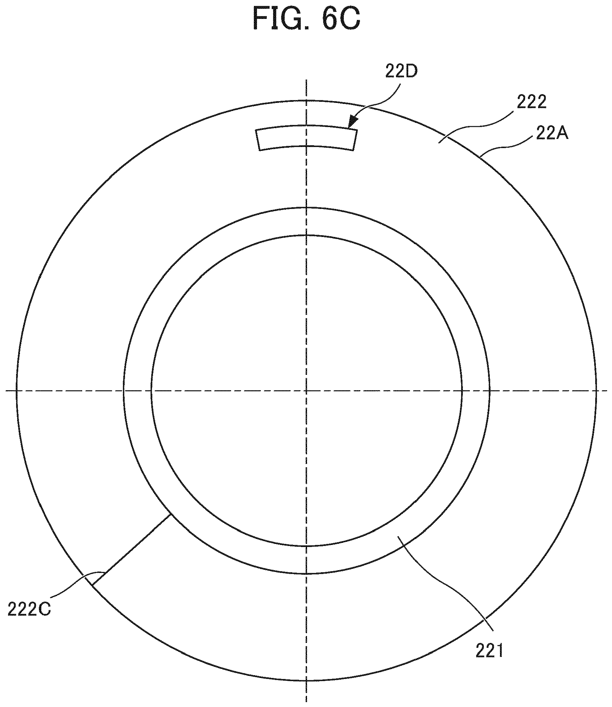

The linear elongated rubber member constituting the second bead filler 222 is subsequently wound up and formed into an annular shape as shown in FIG. 6C. In more detail, the second bead filler 222 is formed in an annular shape by one end side and the other end side of the elongated rubber member being joined at the joint part 222C. At this time, the recess 22D formed in the second bead filler 222 becomes a circular arc shape of a bow made by curving a substantially rectangular shape. In this way, in the present embodiment, prior to the arrangement step of arranging the coating rubber 43 covering the RFID tag 40 in the recess 22D of the second bead filler 222, a step of curving the recess 22D formed in the second bead filler 222 is included.

Next, an arrangement step of arranging the coating rubber 43 covering the RFID tag 40 in the recess 22D of the second bead filler 222 made into a ring shape is conducted. In other words, the coating rubber 43 of substantially rectangular shape having a predetermined thickness is inserted in the recess 22D of a shape made by curving a substantially rectangular shape having a predetermined depth. It should be noted that, since the coating rubber 43 and the antenna 42 such as a spring antenna inside of the coating rubber 43 are deformable, the coating rubber 43 can be inserted, while curving, in the recess 22D which makes a shape curving a substantially rectangular shape. In this way, by inserting the coating rubber 43 while curving into the recess 22D, the inserted coating rubber 43 will hardly fall out from the recess 22D during the manufacturing process, and thus workability improves. In addition, due to assembling the coating rubber 43 in the recess 22D formed in advance in the rubber member, the assembly workability is good.

In this way, by arranging the coating rubber 43 covering the RFID tag 40 in the recess 22D of the second bead filler 222, even in the case of providing the RFID tag 40 in the tire 1, unevenness (great unevenness) hardly occurs in the outer surface of the second bead filler 222, and thus uniformity is favorable. It should be noted that, in order to make the unevenness of the outer surface of the second bead filler 222 as small as possible, it is preferable for the thickness of the coating rubber 43 integrally provided with the RFID tag 40 to be equal to the depth of the recess 22D constituting the fitment recess. Since there is almost no level difference in the surface of the second bead filler 222, the uniformity of the tire 1 thereby further improves.

It should be noted that, since the second bead filler 222 is a raw rubber state prior to vulcanization, and the coating rubber 43 is also preferably a raw rubber state prior to vulcanization, it is possible to paste using the adhesiveness thereof. Alternatively, in the case of the adhesiveness being low or the like, it may be pasted using an adhesive or the like.

It should be noted that the RFID tag 40 embedded in the tire 1 often has a longitudinal direction when including an antenna as shown in FIG. 4. Such an RFID tag 40 is preferably embedded in the tire 1 so that the longitudinal direction thereof becomes a direction along the circumferential direction of the tire 1, for example. By embedding in this way, even when the tire 1 deforms, stress hardly acts on the RFID tag 40.

It should be noted that, the coating rubber 43 of substantially rectangular shape retaining the RFID tag 40 may be installed to the recess 22D of substantially rectangular shape of the second bead filler 222, which is still a linear rubber member, such as that shown in FIG. 6B. In this case, subsequently, upon the second bead filler 222 being wound up and being formed in an annular shape, the recess 22D of substantially rectangular shape and the coating rubber 43 of substantially rectangular shape may deform into a shape made by curving the substantially rectangular shape. In this way, in the present embodiment, after the arrangement step of arranging the coating rubber 43 covering the RFID tag 40 in the recess 22D of the second bead filler 222, a step of curving the recess 22D formed in the second bead filler 222 is included. By conducting such a step, the coating rubber 43 inserted in the recess 22D, after the second bead filler 222 is formed into an annular shape, hardly falls out from the recess 22D, and thus workability improves. In addition, the operation of installing the coating rubber 43 in the recess 22D becomes easier.

It should be noted that the coating rubber 43 retaining the RFID tag 40 may be embedded in the tire so that a longitudinal direction thereof becomes the direction of a tangential line relative to the circumferential direction of the tire. In this case, after forming the second bead filler 222 in an annular shape, the recess 22D of the rectangular shape is formed in the surface thereof, and the coating rubber 43 of substantially rectangular shape retaining the RFID tag 40 is subsequently installed in the recess 22D of substantially rectangular shape. In this case, the operation of installing the RFID tag 40 covered by the coating rubber 43 in the recess 22D is easy. In addition, even when the tire 1 deforms by embedding the coating rubber 43 retaining the RFID tag 40 in the tire 1 so that the longitudinal direction thereof becomes the direction of a tangential line relative to the circumferential direction of the tire, stress hardly acts on the RFID tag 40.

It should be noted that the recess formed in the second bead filler 222 may be formed during extrusion molding. In this case, considering the ease of formation of the recess in extrusion molding, the groove-like recess extending along the entire length of the linear elongated second bead filler 222 may be formed. The groove-like recess becomes a ring-shaped groove, upon the second bead filler 222 being formed in an annular shape. In this case, the coating rubber retaining the RFID tag 40 may be formed from a ring-shaped rubber sheet. Alternatively, in a case of using a substantially rectangular shaped coating rubber 43 such as that shown in FIG. 4, another rubber member may be arranged in a recess other than a portion at which the coating rubber 43 is installed to bury the groove.

It should be noted that the second bead filler 222 may be molded directly into an annular shape. In this case, a projection of substantially rectangular shape may be provided on the inner surface of the mold, so that the recess 22D of substantially rectangular shape is formed in the second bead filler 222.

Next, after inserting the coating rubber 43 retaining the RFID tag 40 in the recess 22D of the second bead filler 222, a pasting step of pasting the rubber sheet 37 to the bead filler 22 and coating rubber 43 is conducted so as to cover this inserted coating rubber 43. By covering the coating rubber 43 inserted in the recess 22D by the rubber sheet 37 in this way, it becomes possible to prevent (inhibit) the occurrence of movement, deformation, peeling, etc. of the coating rubber 43 and RFID tag 40 during tire molding and the like, and thus the structural stability of the tire 1 after vulcanization also improves.

At this time, since the bead filler 22 and rubber sheet 37 are in the raw rubber state prior to vulcanization, it is possible to paste using the adhesiveness thereof. Alternatively, in the case of the adhesiveness being low or the like, it may be pasted using an adhesive or the like.

It should be noted that, by performing assembly of rubber members such as the bead filler 22, rubber sheet 37 and coating rubber 43 while in the state of raw rubber prior to vulcanization, the pasting work of rubber members becomes easy. In addition, the unity among rubber members after vulcanization rises, and the structural stability of the tire 1 after vulcanization also improves.

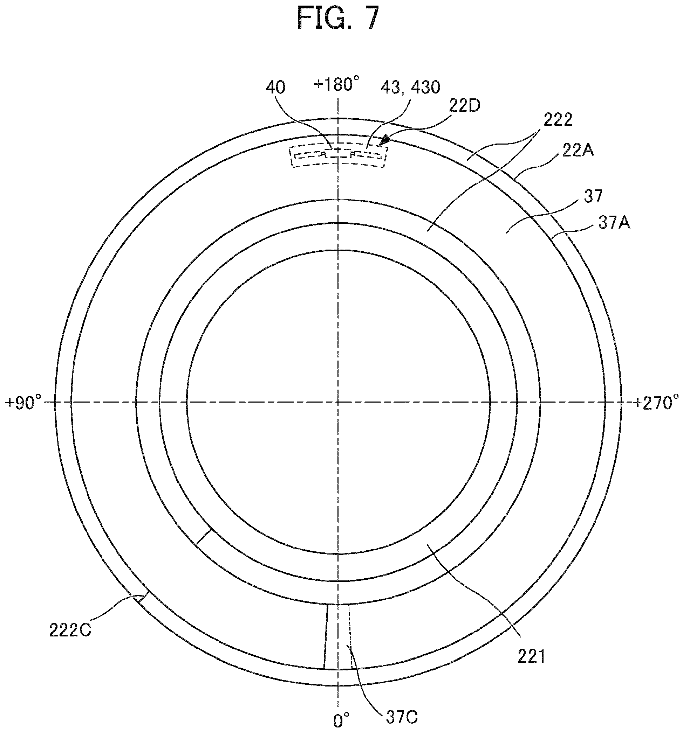

FIG. 7 is a view when looking from an outer side in the tire-width direction at the bead filler 22 during the manufacturing process, and is a view showing a state of pasting the rubber sheet 37 to the bead filler 22 after arranging the RFID tag 40 covered by the coating rubber 43 was arranged in the recess 22D. Herein, the RFID tag 40 and coating rubber 43 are illustrated by dotted lines due to being covered by the rubber sheet 37.

The rubber sheet 37 is formed in an annular shape by one end side and another end side of a long sheet being joined at the joint part 37C. Then, the RFID tag 40 is arranged between the annular bead filler 22 and annular rubber sheet 37 within a range of +90 to +270 degrees, when defining the position of the joint part 37C of the rubber sheet 37 as 0 degrees, with the center of the bead filler 22 as a reference. More preferably, it is arranged in a region in the neighborhood of the position at +180 degrees, as shown in FIG. 7. By arranging the RFID tag 40 at a position reliably distanced from the joint point 37C of the rubber sheet 37 in this way, it is possible to prevent portions of the tire 1 having a possibility of influencing uniformity from overlapping.

It should be noted that, in the present embodiment, as shown in FIG. 7, the outside diameter of the outer circumference 37A of the rubber sheet 37 (tire-radial direction outside end 37A in the tire-width direction cross-sectional view in FIG. 2) is somewhat smaller than the outside diameter of the outer circumference 22A of the bead filler 22 (tire-radial direction outside end 22A in the tire-width direction cross-sectional view in FIG. 2). However, the outside diameters of both may be substantially matching.

Each rubber member and the like constituting the tire is assembled in this way, whereby the green tire is formed. Subsequently, the green tire in which each constituent member including the RFID tag 40 is assembled is vulcanized in the vulcanization step to produce the tire. In other words, after the arrangement step of arranging the coating rubber 43 covering the RFID tag 40 mentioned later in the recess 22D of the second bead filler 222, the vulcanization step of vulcanizing the green tire in which the tire constituent members including the second bead filler 222 are assembled is performed.

It should be noted that the rubber sheet 37 is formed in an annular shape, so as to assume a form covering the folding end 25A of the carcass ply 23 over the entire circumference in the state after green tire assembly. Consequently, it becomes possible to suppress the concentration of stress over the entire circumference. As a result thereof, the stress received by the RFID tag 40 also becomes smaller.

It should be noted that, as a modified example of the manufacturing process of the tire 1, the following such manufacturing process may be adopted. For example, the RFID tag 40 covered by the coating rubber 43 may be pasted to the side of the rubber sheet 37, followed by inserting the coating rubber 43 in the recess 22D of the second bead filler 222 and pasting the rubber sheet 37 to the second bead filler 222.

So long as configuring the coating rubber 43 by the two coating rubber sheets 431, 432 in the above way, since it is possible to form the RFID tag 40 including the coating rubber 43 to be thin, it is favorable upon embedding in the tire 1. In addition, when assembling the RFID tag 40 in the constituent members of the tire 1 prior to vulcanizing, the RFID tag 40 covered by the coating rubber sheet can be very easily installed. For example, at the recess 22D of the second bead filler 222 prior to vulcanization, it is possible to appropriately paste the RFID tag 40 covered by the coating rubber sheets 431, 432 using the stickiness of raw rubber. In addition, by also establishing the coating rubber sheets 431, 432 as raw rubber prior to vulcanization, it is possible to more easily paste also using the stickiness of the rubber sheets themselves.

However, the coating rubber 43 can be employed in various forms, not limited to the form configured by two coating rubber sheets. For example, the thickness of the two rubber sheets of the coating rubber 43 covering the RFID tag 40 may be changed. One rubber sheet on the side strongly pressed during vulcanization and during use may be formed to be thicker than the other rubber sheet, and it may be configured so as to be able to firmly protect the side at which the great pressing force (stress) acts reliably. In addition, for example, it may be a configuration wrapping one coating rubber sheet over the entire circumference of the RFID tag 40, or a configuration adhering the coating rubber 43 in the form of a potting agent having high viscosity over the entire circumference of the RFID tag 40. In addition, it may be a form such that the RFID tag 40 is insert molded by rubber. Even if such a configuration, it is possible to appropriately protect the RFID tag 40.

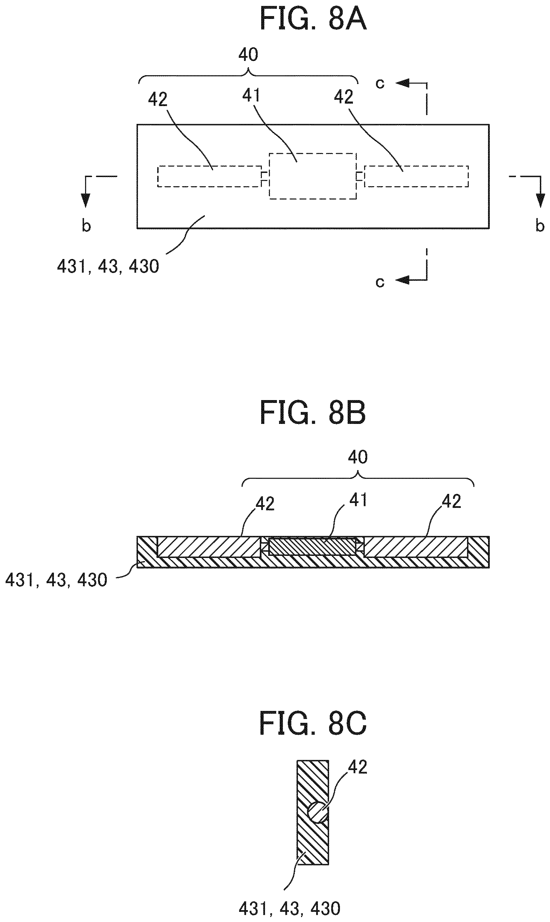

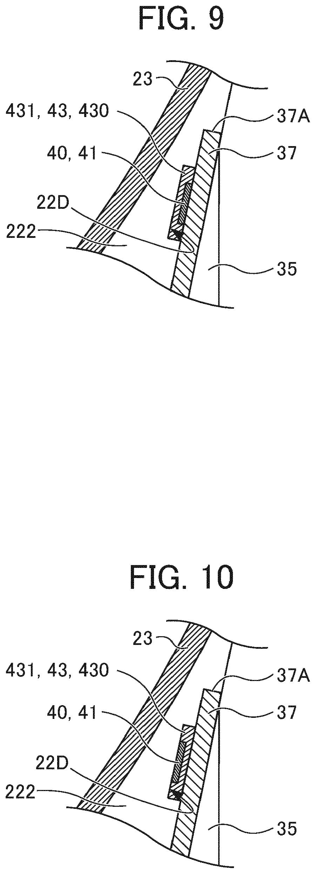

Herein, modified examples of the coating rubber 43 of the present embodiment are shown in FIGS. 8A to 8C. FIG. 9 and FIG. 10 are partial enlarged views showing the RFID tag 40 in the tire 1 in which only one side is covered by the coating rubber 43 of a modified example and the vicinity thereof.

As shown in FIGS. 8A to 8C, the coating rubber 43 of the modified example is provided to only one side of the RFID tag 40. In other words, the coating rubber sheet 431 constituting the coating rubber 43 is provided so as to cover only one side of the RFID tag 40. In the case of providing the coating rubber 43 to only one side of the RFID tag 40, it is possible to make the overall thickness to be thinner. So long as the coating rubber sheet constituting the coating rubber 43 covers at least part of the RFID tag 40, effects such as an improvement in workability in the manufacturing process and stress mitigation will be obtained.

Then, as shown in FIGS. 8A to 8C, in the case of coating only one side of the RFID tag 40 by the coating rubber 43 (coating rubber sheet 431), for example, it becomes possible to configure so as to be able to exhibit superior communication performance by providing the position of the RFID tag 40 at the outer surface side of the bead filler 22 (side of rubber sheet 37, pad member 34) as shown in FIG. 9, and configure so as to be able to exhibit superior protection performance and durability performance by providing the position of the RFID tag 40 at the internal side of the bead filler 22 (side of the ply body 24 of the carcass ply 23, as shown in FIG. 10), for example.

In the above way, by adopting a step of arranging the coating rubber 43 retaining the RFID tag 40 at the recess 22D formed in advance in the second bead filler 222, which is a rubber member constituting the tire 1, the assembling workability of the RFID tag 40 in the manufacturing process of the tire 1 becomes better. In addition, the uniformity improves.

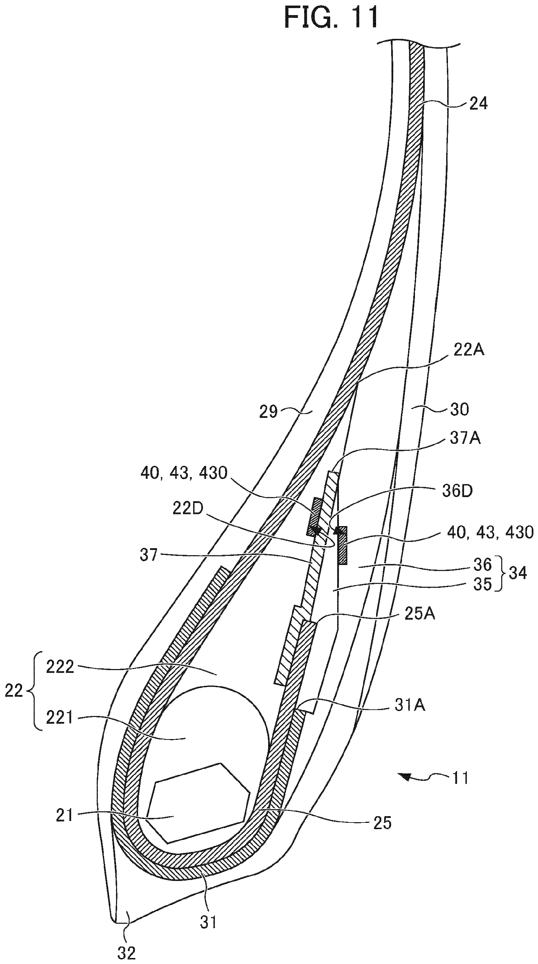

It should be noted that, even if an embodiment arranging the coating rubber 43 retaining the electronic component such as the RFID tag 40 at the recess formed in the rubber member prior to vulcanization adopts a site other than the aforementioned site, similar effects will be obtained. In other words, also in an embodiment forming the recess in a rubber member prior to vulcanization constituting the tire 1 other than the second bead filler 222, and arranging the coating rubber 43 retaining an electronic component other than the RFID tag 40 in this recess, it is possible to obtain similar effects as mentioned above, such as workability becoming better, or uniformity improving. For example, as shown in FIG. 11, even in an embodiment forming a recess 36D in a shape corresponding to the shape of the coating rubber 43 retaining an electronic component other than the RFID tag 40 in the second pad 36, which is a rubber member constituting the tire 1, and arranging the coating rubber 43 retaining the electronic component in this recess 36D, it is possible to obtain similar effects as mentioned above, such as workability becoming better, or uniformity improving.

Herein, the second pad 36 is also a rubber member in which an elongated rubber member prior to vulcanization is wound up, and formed into an annular shape. In other words, during vulcanization and during completion, it is a rubber member formed in an annular shape. Consequently, for the step of forming the recess 36D and the step of arranging the coating rubber 43 in the recess 36D, it is possible to adopt steps similar to the step of forming the recess 22D in the second bead filler 222 mentioned above, and the step of arranging the coating rubber 43 in the recess 22D. It should be noted that, as the rubber member forming the recess for arranging the coating rubber 43, it may be a separate member such as the first pad 35, for example. Even in this case, effects similar to the aforementioned such as the workability becoming better, or uniformity improving can be obtained.

It should be noted that it is preferable for the coating rubber 43 prior to vulcanization arranged in the recess to be covered by another rubber member prior to vulcanization, and subsequently vulcanized together with surrounding rubber members. For example, the coating rubber 43 prior to vulcanization arranged in the recess 36D of the second pad 36 prior to vulcanization is covered by the first pad 35 prior to vulcanization, and subsequently vulcanized together with the second pad and first pad. The unity among rubber members after vulcanization thereby rises, and the structural stability of the tire 1 after vulcanization also improves. It should be noted that a step may be provided of further covering the coating rubber 43 arranged in the recess 36D by a rubber sheet (not shown) prior to vulcanization.

It should be noted that an electronic component retained to either coating rubber 43 among the two coating rubber 43 shown in FIG. 11 may be established as another electronic component, in place of the RFID tag 40. In addition, it may be established as a configuration which forms the recess 36D only in the second pad 36, and arranging the coating rubber 43 retaining an electronic component such as the RFID tag 40 in this recess 36D, for example.

It should be noted that, in the present embodiment, although the RFID tag 40 is embedded in the tire as an electronic component, the electronic component embedded in the tire is not limited to an RFID tag. For example, it may be various electronic components such as a sensor which carries out wireless communication. In the case of embedding the electronic component in the tire, it is necessary to consider the influence on uniformity. In addition, since the electronic component handles electrical information such as sending and receiving of electrical signals, there is a possibility of the performance declining due to metal components being present in the vicinity thereof. In addition, there is a possibility of the electronic component being damaged by excessive stress being applied. Consequently, even in the case of embedding various electronic components in a tire, it is possible to obtain the effects of the present invention. For example, the electronic component may be a piezoelectric element or strain sensor.

According to the tire 1 of the present embodiment, the following effects are exerted.
(1) A manufacturing method of the tire 1 according to the present embodiment is a manufacturing method of the tire 1 equipped with the bead cores 21, bead filler 22 which extends to the outer side in the tire-radial direction of the bead cores 21, the carcass ply 23 extending from the bead core 21 to another bead core 21 and folded back around the bead core 21, and the RFID tag 40 as an electronic component, the method including: a coating step of covering at least part of the RFID tag 40 by the coating rubber 43; a recess formation step of forming the recess 22D of a shape corresponding to the shape of the coating rubber 43 in the bead filler 22; and an arrangement step of arranging the coating rubber 43 covering at least part of the RFID tag 40 in the recess 22D of the bead filler 22. Even in the case of providing the RFID tag 40 to the tire 1, there is thereby no longer a great level difference in the surface of the bead filler 22, and uniformity becomes favorable.
(2) The manufacturing method of the tire 1 according to the present embodiment further includes a step of covering the coating rubber 43 arranged in the recess 22D of the bead filler 22 by the rubber sheet 37, in which the tire 1 further includes the rubber sheet 37 which covers the folding end 25A of the folded back carcass ply 23. It thereby becomes possible to prevent (inhibit) the occurrence of movement, deformation, peeling, etc. of the coating rubber 43 and RFID tag 40 during tire molding and the like, and thus the structural stability of the tire 1 after vulcanization also improves.
(3) The manufacturing method of the tire 1 according to the present embodiment further includes a step of curving the recess 22D formed in the bead filler 22 prior to the arrangement step. The coating rubber 43 covering the RFID tag 40 thereby will hardly fall out from the recess 22D during the manufacturing process, and thus workability improves.
(4) The manufacturing method of the tire 1 according to the present embodiment further includes a step of curving the recess 22D formed in the bead filler 22 after the arrangement step. The coating rubber 43 covering the RFID tag 40 thereby will hardly fall out from the recess 22D during the manufacturing process, and thus workability improves.
(5) The tire 1 according to the present embodiment is the tire 1 equipped with: the bead cores 21, bead filler 22 which extends to the outer side in the tire-radial direction of the bead cores 21, the carcass ply 23 extending from the bead core 21 to another bead core 21 and folded back around the bead core 21, and the RFID tag 40 as an electronic component, the tire 1 having the coating rubber 43 which covers at least part of the RFID tag 40 and the rubber sheet 37 covering the folding end 25A of the folded back carcass ply 23, in which the recess 22D is formed in the bead filler 22, the coating rubber 43 which covers at least part of the RFID tag 40 is arranged in the recess 22D of the bead filler 22, and the coating rubber 43 arranged in the recess 22D of the bead filler is covered by the rubber sheet 37. Even in the case of providing the RFID tag 40 to the tire 1, there is thereby no longer a great level difference in the surface of the bead filler 22, and uniformity becomes favorable. In addition, due to being covered by the rubber sheet 37, it becomes possible to prevent (inhibit) the occurrence of movement, deformation, peeling, etc. of the coating rubber 43 and RFID tag 40 during tire molding and the like, and thus the structural stability of the tire 1 after vulcanization also improves.
(6) The thickness of the coating rubber 43 of the tire 1 according to the present embodiment is equivalent to the depth of the recess 22D of the bead filler 22. There is thereby almost no level difference in the surface of the bead filler 22, and the uniformity becomes more favorable.
(7) The coating rubber 43 of the tire 1 according to the present embodiment is configured from the first coating rubber sheet 431 and second coating rubber sheet 432 interposing therebetween the RFID tag 40. It is thereby possible to reliably protect the RFID tag 40.
(8) The coating rubber 43 of the tire 1 according to the present embodiment is configured from the one coating rubber sheet 431, and covers either one of the outer side in the tire-width direction of the RFID tag 40 or the inner side in the tire-width direction of the RFID tag 40. It is thereby possible to make the coating rubber 43 thin, while protecting the RFID tag 40.
(9) The modulus of the coating rubber 43 of the tire 1 according to the present embodiment is lower than the modulus of the rubber sheet 37. By arranging the RFID tag 40 close to the rubber sheet 37 of high modulus, even in the case of the tire 1 bending, it becomes possible to suppress the deformation amount at the peripheral part of the RFID tag 40. Furthermore, by coating the RFID tag 40 by the coating rubber 43 of low modulus, it becomes possible for the coating rubber 43 to absorb the deformation amount so that deformation of the rubber sheet 37 will not directly transmit to the RFID tag 40.
(10) The tire 1 according to the present embodiment includes the pad member 34 arranged at the outer side in the tire-width direction of the folding end 25A of the carcass ply 23, and the rubber sheet 37 and RFID tag 40 are arranged between the bead filler 22 and pad member 34. Consequently, the RFID tag 40 is more firmly protected.
(11) In the tire 1 according to the present embodiment, the modulus of the portion of the pad member 34 covering at least the folding end 25A of the carcass ply 23 and the modulus of the rubber sheet 37 are higher than the modulus of the surrounding rubber members. Consequently, the RFID tag 40 provided at the periphery of the rubber sheet 37 is more firmly protected.
(12) The manufacturing method of the tire 1 according to the present embodiment includes the coating step of covering at least part of the RFID tag 40 serving as an electronic component by the coating rubber 43; the recess formation step of forming the recess (for example, recess 22D, recess 36D) of a shape corresponding to the shape of the coating rubber in the rubber member (for example, the second bead filler 222, second pad 36) constituting the tire 1; and the arrangement step of arranging the coating rubber 43 covering the RFID tag 40 in the recess of the rubber member. Even in a case of providing the RFID tag 40 serving as an electronic component to the tire 1, there is thereby no great level difference in the surface of the rubber members constituting the tire 1, and thus the uniformity becomes favorable.
(13) The manufacturing method of the tire 1 according to the present embodiment further includes the step of covering the coating rubber arranged in the recess of the rubber member constituting the tire 1 by the rubber sheet. It thereby becomes possible to prevent (inhibit) the occurrence of movement, deformation, peeling, etc. of the coating rubber 43 and RFID tag 40 during tire molding and the like, and thus the structural stability of the tire 1 after vulcanization also improves.
(14) The manufacturing method of the tire 1 according to the present embodiment further includes a step of curving the recess formed in the rubber member, prior to the arrangement step of arranging the coating rubber 43 covering the RFID tag 40 in the recess of the rubber member. The coating rubber 43 covering the RFID tag 40 thereby will hardly fall out from the recess 22D during the manufacturing process, and thus workability improves.
(15) The manufacturing method of the tire 1 according to the present embodiment further includes a step of curving the recess formed in the rubber member, after the arrangement step of arranging the coating rubber 43 covering the RFID tag 40 in the recess of the rubber member. The coating rubber 43 covering the RFID tag 40 thereby will hardly fall out from the recess 22D during the manufacturing process, and thus workability improves.
(16) The tire 1 according to the present embodiment, the recess is formed in the rubber member constituting the tire 1, and the coating rubber 43 covering the RFID tag 40 is arranged in the recess of the rubber member, and the coating rubber 43 arranged in the recess of the rubber member is covered by the rubber sheet 37. Even in the case of providing the RFID tag 40 to the tire 1, there is thereby no great level difference in the surface of the rubber members constituting the tire 1, and thus the uniformity becomes favorable. In addition, due to being covered by the rubber sheet 37, it becomes possible to prevent (inhibit) the occurrence of movement, deformation, peeling, etc. of the coating rubber 43 and RFID tag 40 during tire molding and the like, and thus the structural stability of the tire 1 after vulcanization also improves.

### <Second Embodiment>

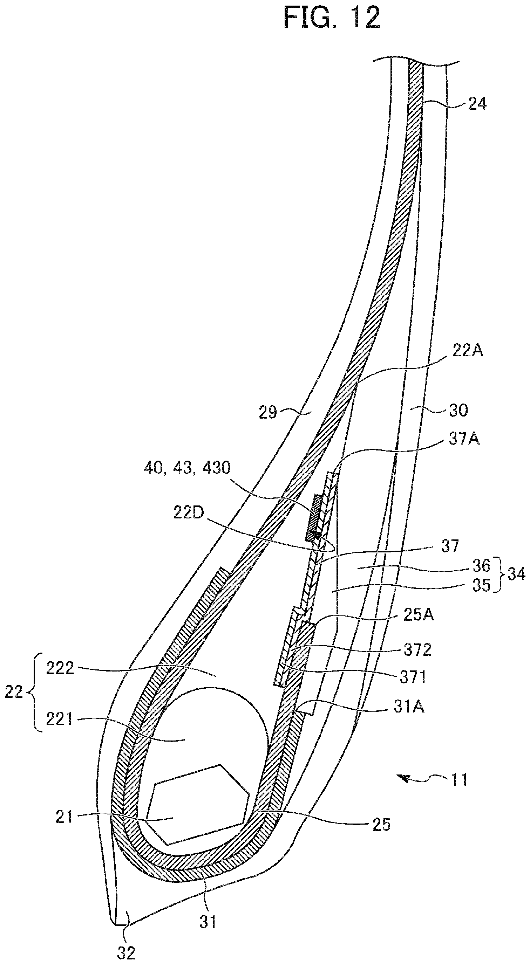

Next, a tire according to a second embodiment will be explained while referencing FIG. 12. It should be noted that the same reference symbols will be attached for the same configurations as the first embodiment in the following explanation, and detailed explanations thereof will be omitted.

In the present embodiment, the rubber sheet 37 is formed by a plurality of layers. More specifically, the rubber sheet 37 includes an interior layer 371 on a side facing the RFID tag 40 covered by the coating rubber 43 (protective member 430), and an outer layer 372 positioned on a side more distanced from the RFID tag 40 than the interior layer 371. Then, the modulus of the interior layer 371 is lower than the modulus of the outer layer 372. Since the modulus of the rubber member is set so as to become lower as approaching the RFID tag 40 in this way, it is possible to appropriately protect the RFID tag 40.

In other words, due to the existence of the outer layer 372 of relatively high modulus, it becomes possible to suppress the deformation amount of the peripheral part of the RFID tag 40, even in a case of the tire 1 bending. Furthermore, due to the existence of the interior layer 371 of relatively low modulus, it becomes possible to absorb the difference between the deformation amount of the RFID tag 40 and the deformation amount of the outer layer 372. It should be noted that it is preferable for the modulus of the outer layer 372 to be established as a modulus of 1.1 times to 1.2 times that of the second pad 36. In other words, the modulus of the outer layer 372 is preferably established as a modulus substantially equal to the modulus of a portion (first pad 35) at least covering the folding end 25A of the carcass ply 23 in the pad member 34. It should be noted that it is preferable for the modulus of the interior layer 371 to be established as a modulus substantially equivalent to the second bead filler 222. Alternatively, rubber of lower modulus than the second bead filler 222 may be used in consideration of effectively absorbing the difference in deformation amount. It should be noted that the rubber sheet 37 only needs to include at least two layers having the functions of the aforementioned interior layer and outer layer, and may be formed by three or more layers, for example.

According to the tire related to the present embodiment, the following effects are exerted in addition to the above-mentioned (1) to (16).

(17) The rubber sheet 37 includes the interior layer 371 on a side facing the coating rubber 43 which covers at least part of the RFID tag 40, and the outer layer 372 more to the outer side than the interior layer, and the modulus of the interior layer 371 is lower than the modulus of the outer layer 372. By the existence of the outer layer 372 of relatively high modulus, it thereby becomes possible to suppress the deformation amount at the peripheral part of the RFID tag 40, even in a case of the tire 1 bending. Furthermore, by the existence of the interior layer 371 of relatively low modulus, it becomes possible to absorb the difference between the deformation amount of the RFID tag 40 and the deformation amount of the outer layer 372. Consequently, it is possible to appropriately protect the RFID tag 40.

### <Third Embodiment>

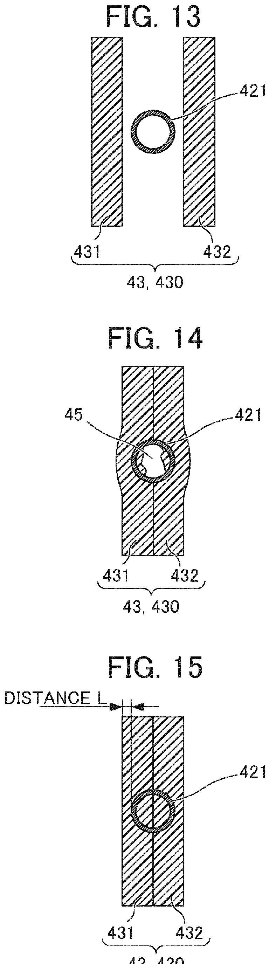

Next, a tire according to a third embodiment will be explained while referencing FIGS. 13 to 19. It should be noted that the same reference symbol will be attached for the same configurations as the first and second embodiments in the following explanation, and detailed explanations thereof will be omitted. The present embodiment is a particularly favorable embodiment in the case of the antenna of the RFID tag 40 being a coil-shaped spring antenna.

In the RFID tag 40 of the present embodiment, a coil-shaped spring antenna 421 having high communicability and flexibility can be used as the antenna. The spring antenna 421 is set to an antenna length which was optimized according to the frequency band, etc. to be used.

In the present embodiment, prior to interposing the RFID tag 40 by the two coating rubber sheets 431, 432 constituting the coating rubber 43 (protective member 430), the rubber is arranged within the spring antenna 421. More preferably, rubber is filled into the spring antenna, so that air will not remain as much as possible. This process and the reason for adopting this process will be explained using FIGS. 13 to 19.

First, a state of the surroundings of the RFID tag 40 in a case of not filling rubber into the spring antenna 421 will be explained as a reference example using FIGS. 13 to 15. FIG. 13 is a view showing a cross section of the spring antenna 421, and coating rubber sheets 431, 432, prior to interposing the RFID tag 40 by the coating rubber sheets 431, 432. FIG. 14 is a view showing a cross section of the spring antenna 421, and coating rubber sheets 431, 432, after interposing the RFID tag 40 by the coating rubber sheets 431, 432.

As shown in FIG. 14, in this reference example, since rubber is not filled into the spring antenna 421 in advance, a certain amount of air 45 may remain within the spring antenna 421 after interposing by the coating rubber sheets 431, 432. If air remains in this way, the integrity of the coating rubber sheets 431, 432 and the spring antenna 421 becomes insufficient, and when the tire deforms, there is concern over the spring antenna 421 not following the motion of the rubber, and the RFID tag 40 having the spring antenna 421 being damaged.

It should be noted that raw rubber before vulcanization is used as the coating rubber sheets 431, 432 herein. Consequently, by pushing the coating rubber sheets 431, 432 from both sides, the coating rubber sheets 431, 432 sticks to some extent inside the spring antenna as shown in FIG. 14. However, very large amounts of time and labor are required in order to stick the coating rubber sheets 431, 432 until the inside of the spring antenna is completely embedded.

Then, even if assuming a case of taking time and sticking the rubber sheets until the inside of the spring antenna is embedded, the distance L between the outer circumferential part of the spring antenna 421 and the outer surface of the coating rubber sheets 431, 432 becomes very short, as shown in FIG. 15. In addition, it is difficult to stabilize this distance L, and locally thin portions can occur. Consequently, the protection of the RFID tag 40 by the coating rubber sheets 431, 432 becomes insufficient, and during vulcanization, there is a possibility of the coating rubber sheets 431, 432 being damaged.

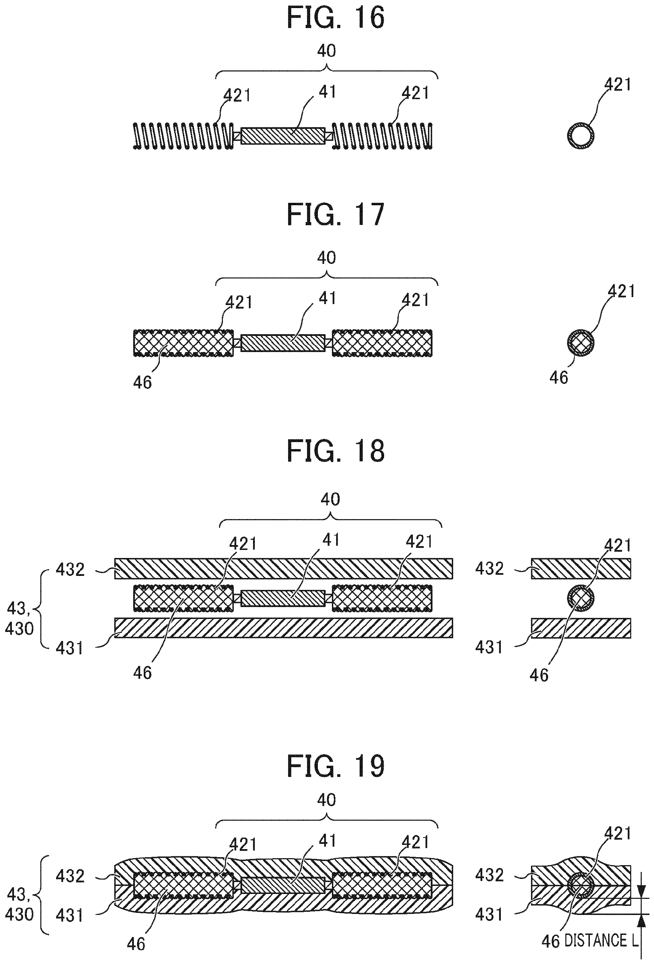

Therefore, in the present embodiment, prior to interposing the RFID tag 40 by the coating rubber sheets 431, 432, the rubber is arranged within the spring antenna 421, as shown in FIGS. 16 to 19. More preferably, rubber is filled within the spring antenna so that air does not remain as much as possible. It should be noted that the views shown on the right sides of FIGS. 16 to 19 are views showing a transverse section of the spring antenna 421 and the surrounding thereof.

FIG. 16 is a view showing a state prior to filling the rubber 46 into the spring antenna 421, and FIG. 17 is a view showing a state after filling the rubber 46 into the spring antenna 421. The rubber 46 is embedded so as to be almost the same outside diameter as the outer circumferential face of the spring antenna 421. Then, in the case of the rubber 46 escaping from the outer circumferential face of the spring antenna 421, it is preferable to wipe off this portion. In other words, the outer circumferential face of the rubber 46 is preferably molded so as to become substantially the same surface as the outer circumferential face of the spring antenna 421. It should be noted that the rubber 46 may be filled into the spring antenna 421, and the outer circumference of the spring antenna 421 may be thinly wrapped by the rubber 46. On the other hand, if thickly wrapping the spring antenna 421 by the rubber 46, in addition to the flexibility of the spring antenna 421 being harmed, the dimension in the width direction formed by the coating rubber sheets 431, 432 after interposing the RFID tag 40 becomes larger, which is not preferable. It should be noted that the rubber 46 may be embedded so as to become substantially the same outside diameter as the inner circumferential face of the spring antenna 421. It is desirable for the outer circumferential part of the rubber 46 to be located within the range of the inner circumferential face and outer circumferential face of the spring antenna 421. In the above way, in the step of arranging rubber in the spring antenna 421, since rubber is filled only into the spring antenna 421 without pouring rubber in the periphery of the RFID chip 41, it is possible to configure the RFID tag 40 sandwiched by the coating rubber sheets 431, 432 compactly, even when sandwiching the RFID tag 40 by the coating rubber sheets 431, 432 in a subsequent step.

Herein, rubber having flexibility is used as the rubber 46 in order to ensure the flexibility of the spring antenna 421. However, it is preferable to use rubber of a modulus higher than the coating rubber sheets 431, 432 as the rubber 46, in consideration of the workability, etc. It should be noted that preferably unvulcanized rubber is used as the rubber 46 arranged within the spring antenna 421. By establishing the rubber 46 and coating rubber sheets 431, 432 as unvulcanized rubber and vulcanizing simultaneously, the integrity of the rubber 46, coating rubber sheets 431, 432 and spring antenna 421 rises. In addition, the rubber 46, and coating rubber sheets 431, 432 are more preferably established as the same type of rubber. It should be noted that, by emphasizing the flexibility of the spring antenna 421, rubber of lower modulus than the coating rubber sheets 431, 432 may be used as the rubber 46. In addition, rubber of substantially the same modulus, and rubber of the same material may be used. It should be noted that vulcanized rubber may be used as the rubber 46 arranged within the spring antenna 421. In addition, rubber-based adhesive, rubber-based filler, etc. can also be used. Taking account of configuring so as not to leave air within the spring antenna 421 as much as possible, while ensuring flexibility, it is possible to adopt various rubber-based materials. As the arranging operation of the rubber 46, various methods can be adopted; however, for example, it is also possible to inject rubber into the spring antenna 421 using a syringe. In this case, a set appropriate amount of the rubber 46 may be filled using a syringe. In addition, after filling a large amount of the rubber 46, portions protruding from the outer circumference of the spring antenna 421 may be wiped off.

FIG. 18 is a view showing a state prior to interposing the RFID tag 40 into which the rubber 46 is filled in the spring antenna 421, by the coating rubber sheets 431, 432, and FIG. 19 is a view showing a state after interposing by the coating rubber sheets 431, 432.

As shown in FIG. 19, according to the present embodiment, since the rubber 46 is filled in advance into the spring antenna 421, no air pockets exist between the coating rubber sheets 431, 432. Consequently, since it is unnecessary to be concerned over air pockets, the process of interposing the RFID tag 40 by the coating rubber sheets 431, 432 also becomes easy. In addition, by the rubber 46 being arranged within the spring antenna 421, the integrity of the spring antenna 421, rubber 46, and coating rubber sheets 431, 432 rises, and when the tire deforms, the spring antenna 421 follows the movement of the rubber. Consequently, the durability of the RFID tag 40 having the spring antenna 421 also improves.

In addition, according to the present embodiment, the distance L between the outer circumferential part of the spring antenna 421 and the outer circumferential face of the coating rubber sheets 431, 432 stabilizes. In other words, a distance close to the thickness of the coating rubber sheets 431, 432 is generally secured as this distance L. Consequently, the RFID tag 40 is sufficiently protected by the coating rubber sheets 431, 432. In the present embodiment, the RFID tag 40 interposed by the coating rubber sheets 431, 432 is fixedly set up at the bead filler 22, etc., and subsequently, the green tire is vulcanized.

According to the tire related to the present embodiment, the following effects are exerted in addition to the above-mentioned (1) to (17).

(18) The present embodiment provides a step of arranging the rubber 46 within the spring antenna 421 of the RFID tag 40 serving as an electronic component having a communication function; a step of interposing the RFID tag 40 having the spring antenna 421 into which the rubber 46 was arranged, by the coating rubber sheets 431, 432 constituting the coating rubber 43, and a step of arranging the RFID tag 40 interposed by the coating rubber sheets 431, 432 in the recess 22D of the bead filler 22. The air 45 will thereby not remain inside the spring antenna 421. In addition, since it is unnecessary to be concerned about air pockets, the work of interposing the RFID tag 40 by the coating rubber sheets 431, 432 also becomes sample. In addition, since the distance L between the outer circumferential part of the spring antenna 421 and the outer surface of the rubber sheets 431, 432 is stabilized, the RFID tag 40 is sufficiently protected by the coating rubber sheets 431, 432.

### <Fourth Embodiment>

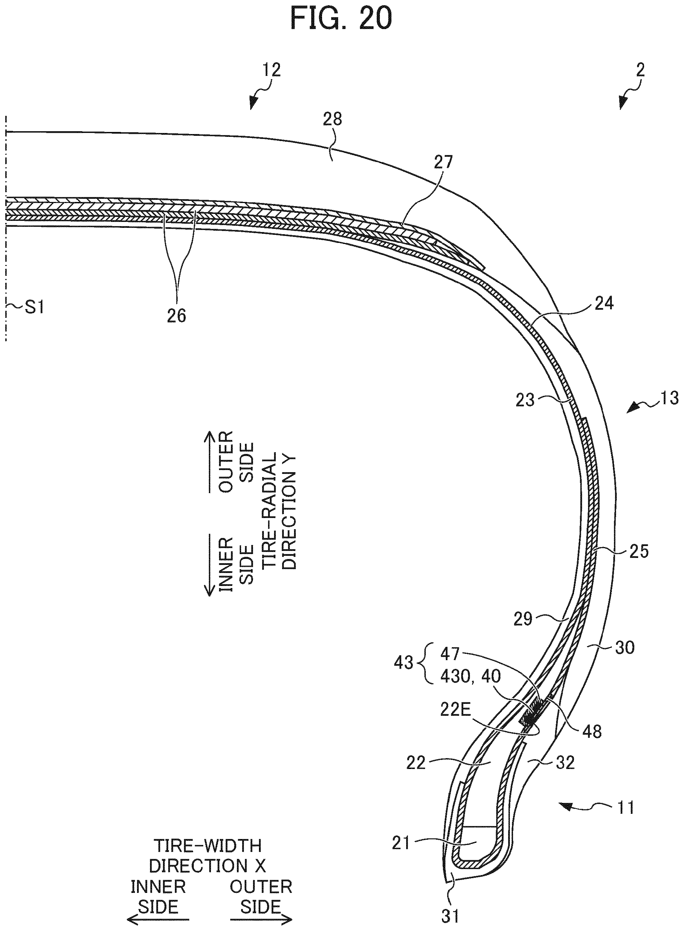

Next, a tire according to a fourth embodiment will be explained while referencing FIGS. 20 to 25. It should be noted that the same reference symbols will be attached for the same configurations as the first embodiment in the following explanation, and detailed explanations thereof will be omitted.

A tire 2 of the present embodiment is a tire which is favorable as a tire of a passenger car or the like, for example, and there are portions for which the configuration differs from the tire 1 of the first embodiment, as shown in FIG. 20. Also in a tire having such a different configuration, so long as adopting an embodiment such as that disclosed in the first embodiment, i.e. embodiment forming the recess in the rubber member prior to vulcanization constituting the tire, and arranging the coating rubber 43 retaining an electronic component such as the RFID tag 40 in this recess, it is possible to obtain similar effects as the first embodiment, such as workability becoming better, or uniformity improving.

For example, the tire 2 of the present embodiment, due to assuming mainly to use in a passenger vehicle having small relative load bearing, does not include the pad member 34 (first pad 35, second pad 36), rubber sheet 37 and shoulder pad 38. Then, the bead filler 22 becomes integral without dividing into the first bead filler 221 and second bead filler 222. In addition, the chafer 31 is configured from rubber into which fibers are kneaded, or rubber of high modulus. Then, the rim strip rubber 32 is arranged at the outer side in the tire-width direction of the ply folding part 25 and chafer 31. The tread 12 includes the cap ply 27 as a belt reinforcement layer provided at the outer side in the tire-radial direction of the belt 26. The cap ply 27 is configured by rubber coating an insulative organic fiber layer such as of polyamide fibers. By providing the cap ply 27, it is possible to achieve an improvement in durability and reduction in road noise while traveling. In this way, the tire 2 of the present embodiment has a portions of different structure from the tire 1 of the first embodiment.

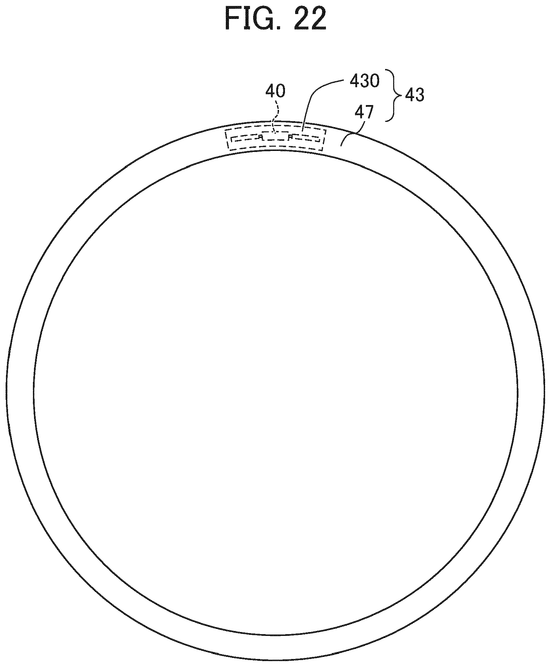

The RFID tag 40 of the present embodiment is covered by the protective member 430 similarly to the first embodiment. Furthermore, the RFID tag 40 in a state covered by the protective member 430 is covered by the rubber sheet 47 of annular shape, which is an fitment retaining member, and is integrally attached at a predetermined position of this rubber sheet 47 of annular shape, as shown in FIG. 22. In this case, the protective member 430 and annular rubber sheet 47 of the present embodiment configure the coating rubber 43 which covers at least part of the RFID tag 40.

It should be noted that the RFID tag 40 may not necessarily be embedded inside of the tire 2 by establishing a state covering by the protective member 430. In other words, it is not a problem even if providing integrally to the annular rubber sheet (fitment retaining member) 47 in a state of only the RFID chip 41 and antenna 42, without providing the protective member 430. In this case, the annular rubber sheet 47 of the present embodiment constitutes the coating rubber 43 covering at least part of the RFID tag 40.

In addition, the RFID tag 40 (including a state protected by the protective member 430) may be completely covered by the annular rubber sheet 47, or may be covered in a state in which part is exposed. In the case of completely covering, for example, the annular rubber sheet 47 may be configured by two rubber sheets, and configured so as to install the RFID tag 40 by sandwiching between the two annular rubber sheets.

The annular rubber sheet 47 preferably uses the same rubber material as the protective member 430, for example.

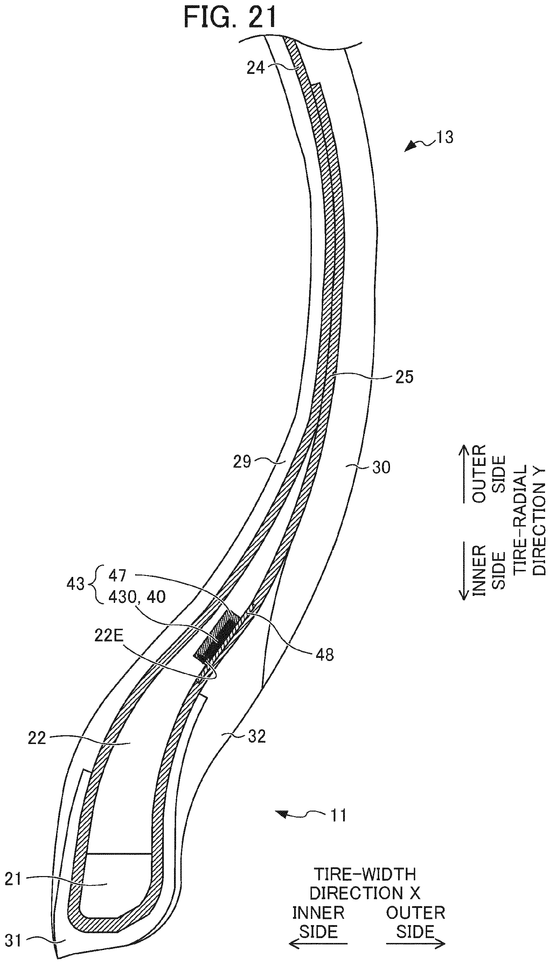

Then, in the tire 2 of the present embodiment, as shown in FIG. 20 and FIG. 21, an annular fitment recess 22E depressed from the outer surface to the inner surface side (back side, other side) is formed in an outer surface (top surface, one side) facing the outer side in the tire-width direction (tire outer surface side) of the bead filler 22 made of rubber formed so as to assume a substantially triangular shape in a cross section of tapered tip shape, the annular rubber sheet 47 integrally provided with the RFID tag 40 is fit into this fitment recess 22E to arrange concentrically with the tire 2, whereby the RFID tag 40 is embedded inside of the tire 2.

The annular fitment recess 22E is formed to match the shape of the annular rubber sheet 47, and in a state engaging the annular rubber sheet 47 in the fitment recess 22E, is formed so that unevenness (great unevenness) does not arise in the outer surface of the bead filler 22 by the annular rubber sheet 47.

Furthermore, in the tire 2 of the present embodiment, so as to cover the fitment recess 22E of the bead filler 22, and consequently the annular rubber sheet 47 engaged in the fitment recess 22E, as shown in FIG. 20, FIG. 21 and FIG. 23, the annular rubber sheet 48, which is a coating retaining member, is installed at the outer surface of the bead filler 22.

The annular rubber sheet 48, for example, is preferably formed to be as thin as possible in a range which can retain the annular rubber sheet 47 (RFID tag 40) in a state inserted in the fitment recess 22E. In addition, the annular rubber sheet 48 is preferably formed to be able to paste to the outer surface of the bead filler 22 by utilizing the stickiness in the state of raw rubber of the bead filler 22, imparting stickiness to one surface, or the like. Furthermore, it is preferable to be a rubber material which can fuse to the bead filler 22 by heating and pressurizing during the vulcanization process of vulcanizing the green tire in the manufacturing process of the tire 2 described later.

Herein, in the present embodiment, although the rubber sheet 47 of the fitment retaining member is formed in a ring shape, and the fitment recess 22E of the bead filler 22 engaging with this is formed in an annular shape, the rubber sheet 47 is not necessarily a ring shape, and according to this, the fitment recess 22E is also not necessarily a ring shape. In other words, so long as it is possible to install the rubber sheet 47 integrally provided with the RFID tag 40 by inserting in the fitment recess 22E so that unevenness (great unevenness) does not arise in the bead filler 22, it is not particularly necessary to limit the shapes of the rubber sheet 47, which is the fitment retaining member, and the fitment recess 22E. For example, as shown in the first embodiment, the shapes of the rubber sheet 47, which is the fitment retaining member and the fitment recess 22E, may be substantially rectangular shapes.

Also with the rubber sheet 48 of the coating retaining member, so long as it is possible to coat and retain the rubber sheet 47 (RFID tag 40) in a state inserted in the fitment recess 22E, by installing to the outer surface of the bead filler 22, it may not necessarily be formed in an annular shape.

On the other hand, upon manufacturing the tire 2 of the present embodiment configured as described above, (the manufacturing method of the tire of the present embodiment) includes: a step of forming the fitment recess 22E to match the shape of the rubber sheet 47 of the fitment retaining member provided integrally with the RFID tag (electronic component) 40 to the bead filler 22 (fitment recess formation step); a step of installing the rubber sheet 47 of the fitment retaining member provided integrally with the RFID tag (electronic component) 40 by inserting in the fitment recess 22E of the bead filler 22 (electronic component installation step); a step of retaining the rubber sheet 48 of the coating retaining member to the bead filler 22 by pasting or the like, and covering the rubber sheet 47 and thus the RFID tag 40, inserted in the fitment recess 22E (coating retaining member installation step); and a step of molding and vulcanizing a green tire to which the RFID tag 40 was installed (molding step, vulcanization step).

In the step of forming the fitment recess 22E in the bead filler 22, it is not necessary to particularly limit the formation means and technique of the fitment recess 22E, and is sufficient so long as using the appropriate means. As the formation means and technique of the fitment recess 22E, for example, configuring so as to extrude and mold the bead filler 22 as well as form the fitment recess 22E; forming the fitment recess 22E by shaving, compression molding, thermoforming, etc. in the processed bead filler 22, or the like can be exemplified.

Then, in the tire 2 (and manufacturing method of the tire 2) of the present embodiment, during tire manufacture, it becomes possible to easily assemble the RFID tag 40 to the bead filler 22, by a simple operation such as inserting the rubber sheet 47 of the fitment retaining member installing the RFID tag 40 in the fitment recess 22E formed in the bead filler 22.

In addition, even when configuring so as to install the RFID tag 40 to the outer surface side of the bead filler 22,by forming the fitment recess 22E of the annular bead filler 22 with the size of the rubber sheet 47 integrally provided with the RFID tag 40, and inserting the rubber sheet 47 in this fitment recess 22E, it is possible to maintain and secure uniformity in the circumference relative to the thickness of the bead filler 22, without unevenness arising in the outer surface of the bead filler 22.

According to the tire 2 (and manufacturing method of the tire 2) of the present embodiment, it thereby becomes possible to eliminate deterioration in uniformity without a great level difference arising from the RFID tag 40.

Furthermore, since the RFID tag 40 is provided to the bead filler 22, and embedded in a form involved by the carcass ply 23, the RFID tag 40 is protected by the carcass ply 23 during tire manufacture, during use after tire manufacture, etc., and thus it is possible to suppress vibration, deformation force, etc. acting on the RFID tag 40. It is thereby possible to improve the durability of the RFID tag (electronic component) 40, as well as being possible to suitably maintain and secure the communication performance (efficiency) thereof.

In addition, in the tire 2 (and manufacturing method of the tire 2) of the present embodiment, the RFID tag 40 is integrally provided to the rubber sheet 47 of the fitment retaining member. Furthermore, the RFID tag 40 is covered by the protective member 430. Furthermore, the RFID tag 40 fit and installed in the fitment recess 22E is covered by the rubber sheet 48 of the coating retaining member. By such respective configurations and combinations of configurations, it is possible to effectively suppress vibration, deformation force, etc. acting on the RFID tag 40 during tire manufacture, during use after tire manufacture, etc. Consequently, it is possible to achieve a further improvement in durability of the RFID tag (electronic component) 40, and becomes possible to more suitably maintain and secure the communication performance (efficiency) thereof.

In addition, by covering the RFID tag 40 fitted and installed in the fitment recess 22E by the rubber sheet 48 of the coating retaining member, it becomes possible to prevent (inhibit) the occurrence of movement, deformation, peeling, etc. of the rubber sheet 47 and RFID tag 40 during tire molding and the like, and thus the structural stability of the tire 2 after vulcanization also improves.

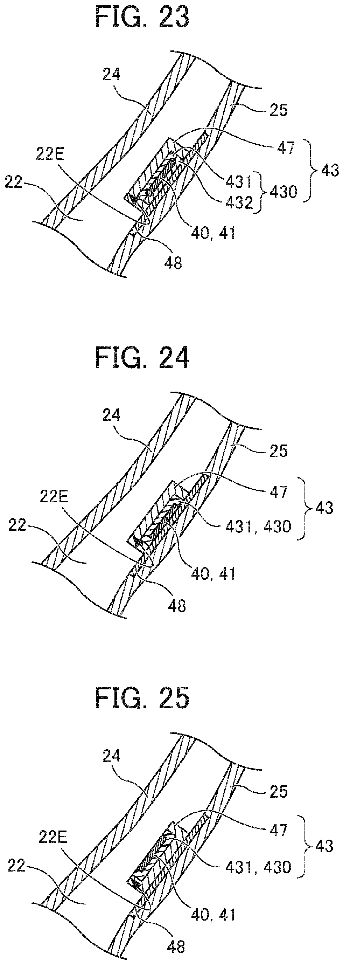

Furthermore, in the case of varying the thickness of each of the two coating rubber sheets 431, 432 shown in FIGS. 4A to 4C, or a case of covering the RFID tag 40 with one coating rubber sheet 431 as shown in FIGS. 8A to 8C, for example, it becomes possible to configure so as to be able to exhibit superior communication performance by providing the position of the RFID tag 40 at the outer surface side of the bead filler 22 (side of ply folding part 25 of the carcass ply 23) as shown in FIG. 24, or to configure so as to be able to exhibit superior protection performance and durability performance by providing the position of the RFID tag 40 on the interior side of the bead filler 22 (side of ply body 24 of the carcass ply 23), as shown in FIG. 25.

According to the tire according to the present embodiment, the following effects are exerted in addition to the above (1) to (18).

(19) The manufacturing method of the tire 2 of the present embodiment is a method of manufacturing the tire 2 which includes: the bead core 21 arranged at the interior end in the tire-radial direction; the bead filler 22 extended from the bead core 21 to the outer side in the tire-radial direction; the carcass ply 23 extending from the outer side in the tire-radial direction to the inner side in the tire-radial direction, and having the ply folding part 25 which folds back so as to involve the bead core 21 and bead filler 22 and extending to the outer side in the tire-radial direction; and the RFID tag 40 as an electronic component embedded inside of the tire 2, the method including: a step of forming the fitment recess 22E in the surface of the bead filler 22; and a step of inserting fitment retaining member provided integrally with the RFID tag 40 as an electronic component to install in the fitment recess 22E. Even in the case of providing the RFID tag 40 to the tire 2, there is thereby no longer a great level difference in the surface of the bead filler 22, and uniformity becomes favorable.

(20) The manufacturing method of the tire 2 of the present embodiment includes a step of installing the coating retaining member which coats and retains the fitment retaining member in the surface of the bead filler 22, after installing the fitment retaining member in the fitment recess 22E. It thereby becomes possible to prevent (inhibit) the occurrence of movement, deformation, peeling, etc. of the coating rubber 43 and RFID tag 40 during tire molding and the like, and thus the structural stability of the tire 2 after vulcanization also improves.

(21) In the tire 2 of the present embodiment equipped with the bead cores 21 arranged at the inner side end in the tire-radial direction; bead filler 22 extending from the bead core 21 to the outer side in the tire-radial direction; the carcass ply 23 extending from the outer side in the tire-radial direction to the inner side in the tire-radial direction, and having a ply folding part 25 which folds back so as to envelop the bead core 21 and bead filler 22 and extends to the outer side in the tire-radial direction; and the RFID tag 40 as an electronic component embedded inside of the tire 2, the RFID tag 40 as the electronic component is embedded in the fitment recess 22E formed in the surface of the bead filler 22 by inserting into the fitment retaining member integrally provided with the RFID tag 40 as the electronic component. Even in the case of providing the RFID tag 40 to the tire 2, there is thereby no longer a great level difference in the surface of the bead filler 22, and uniformity becomes favorable.

(22) In the tire 2 of the present embodiment, the coating retaining member 48 which coats and retains the fitment retaining member inserted in the fitment recess 22E is provided at the surface of the bead filler 22. It thereby becomes possible to prevent (inhibit) the occurrence of movement, deformation, peeling, etc. of the coating rubber 43 and RFID tag 40 during tire molding and the like, and thus the structural stability of the tire 2 after vulcanization also improves.

It should be noted that the tire of the present invention can be adopted as various types of tires such as for passenger cars, light trucks, trucks and buses. It should be noted that the present invention is not to be limited to the above-mentioned embodiments, and that even when carrying out modifications, improvements, etc. within a scope capable of achieving the object of the present invention, it is encompassed by the scope of the present invention.

### EXPLANATION OF REFERENCE NUMERALS

1, 2 tire
11 bead
12 tread
13 sidewall
21 bead core
22 bead filler
22D recess
221 first bead filler
222 second bead filler
222C joint part
23 carcass ply
24 ply body
25 ply folding part
25A folding end
26 steel belt
28 tread rubber
29 inner liner
30 sidewall rubber
31 chafer
32 rim strip rubber
34 pad member
35 first pad
36 second pad
36D recess
37 rubber sheet
371 inner surface layer
372 outer layer
37C joint part
40 RFID tag
41 RFID chip
42 antenna
421 spring antenna
43 coating rubber
430 protective member
431, 432 coating rubber sheet
46 rubber
47 rubber sheet
48 rubber sheet

## Claims

1. A manufacturing method of a tire (1) including bead cores (21), a bead filler (22) extending to an outer side in a tire-radial direction of the bead core (21), a carcass ply (23) which extends from the bead core (21) to another bead core (21), and is folded back around the bead core (21), and an electronic component (40), the method comprising the steps of:
covering at least part of the electronic component (40) by a coating rubber (43);
forming a recess (22D) of a shape corresponding to a shape of the coating rubber (43) in the bead filler (22) by shaving, compression molding and/or thermoforming; and
after forming the recess, arranging a coating rubber (43) covering at least part of the electronic component (40) in the recess (22D) of the bead filler (22).

2. The manufacturing method of the tire (1) according to claim 1, wherein the tire (1) further includes a rubber sheet (37) which covers a folding end (25A) of the carcass ply which was folded back,
the method further comprising a step of covering the coating rubber (43) disposed in the recess (22D) of the bead filler (22) by the rubber sheet (37).

3. The manufacturing method of the tire (1) according to claim 1 or 2, further comprising a step of curving the recess (22D) formed in the bead filler (22), prior to the step of arranging.

4. The manufacturing method of the tire (1) according to claim 1 or 2, further comprising a step of curving the recess (22D) formed in the bead filler (22), after the step of arranging.

5. A tire (1) comprising: bead cores (21); a bead filler (22) extending to an outer side in a tire-radial direction of the bead core (21); a carcass ply (23) extending from the bead core (21) to another bead core (21), and folded back around the bead core (21); an electronic component (40);
coating rubber (43) which covers at least part of the electronic component (40); and
a rubber sheet (37) which covers a folding end (25A) of the carcass ply which is folded back,
wherein a recess (22D) is formed in the bead filler (22),
wherein the coating rubber (43) which covers at least part of the electronic component (40) is disposed in the recess of the bead filler (22),
wherein the coating rubber (43) disposed in the recess (22D) of the bead filler (22) is covered by the rubber sheet (37); and
wherein the tire is manufactured by the manufacturing method of any one of claims 1 to 4.

## Patentansprüche

1. Herstellungsverfahren eines Reifens (1) einschließlich Wulstkerne (21, eines Wulstfüllstoffs (22), der sich in einer Reifenradialrichtung des Wulstkerns (21) zu einer Außenseite erstreckt, einer Karkassenlage (23), welche sich von dem Wulstkern (21) zu einem anderen Wulstkern (21) erstreckt und um den Wulstkern (21) herum zurückgefaltet ist, und einer elektronischen Komponente (40), wobei das Verfahren folgende Schritte umfasst:
Bedecken zumindest eines Teils der elektronischen Komponente (40) durch einen Beschichtungsgummi (43);
Bilden einer Aussparung (22D) einer Form, die einer Form des Beschichtungsgummis (43) in dem Wulstfüllstoff (22) entspricht, durch Schaben, Formpressen und/oder Wärmeformen; und
nach dem Bilden der Aussparung, Anordnen eines Beschichtungsgummis (43), der zumindest einen Teil der elektronischen Komponente (40) bedeckt, in der Aussparung (22D) des Wulstfüllstoffs (22).

2. Herstellungsverfahren des Reifens (1) nach Anspruch 1, wobei der Reifen (1) ferner eine Gummiplatte (37) aufweist, welche ein Faltende (25A) der Karkassenlage, welche zurück gefaltet wurde, bedeckt,
wobei das Verfahren ferner einen Schritt des Bedeckens des Beschichtungsgummis (43), der in der Aussparung (22D) des Wulstfüllstoffs (22) angeordnet ist, durch die Gummiplatte (37) umfasst.

3. Herstellungsverfahren des Reifens (1) nach Anspruch 1 oder 2, ferner umfassend einen Schritt des Krümmens der Aussparung (22D), die in dem Wulstfüllstoff (22) gebildet ist, vor dem Schritt des Anordnens.

4. Herstellungsverfahren des Reifens (1) nach Anspruch 1 oder 2, ferner umfassend einen Schritt des Krümmens der Aussparung (22D), die in dem Wulstfüllstoff (22) gebildet ist, nach dem Schritt des Anordnens.

5. Reifen (1), aufweisend: Wulstkerne (21); einen Wulstfüllstoff (22), das sich in einer Reifenradialrichtung des Wulstkerns (21) zu einer Außenseite erstreckt; eine Karkassenlage (23), die sich von dem Wulstkern (21) zu einem anderen Wulstkern (21) erstreckt und um den Wulstkern (21) herum zurückgefaltet ist; eine elektronische Komponente (40);
einen Beschichtungsgummi (43), welcher zumindest einen Teil der elektronischen Komponente (40) bedeckt; und
eine Gummiplatte (37), welche ein Faltende (25A) der Karkassenlage bedeckt, welche zurückgefaltet ist,
wobei eine Aussparung (22D) in dem Wulstfüllstoff (22) gebildet ist,
wobei der Beschichtungsgummi (43), welcher zumindest einen Teil der elektronischen Komponente (40) bedeckt, in der Aussparung des Wulstfüllstoffs (22) angeordnet ist,
wobei der Beschichtungsgummi (43), der in der Aussparung (22D) des Wulstfüllstoffs (22) angeordnet ist, von der Gummiplatte (37) bedeckt wird; und
wobei der Reifen durch das Herstellungsverfahren nach einem der Ansprüche 1 bis 4 hergestellt wird.

## Revendications

1. Procédé de fabrication d'un pneu (1) incluant des tringles de talon (21), une charge de talon (22) s'étendant vers un côté externe dans la direction radiale du pneu de la tringle de talon (21), une nappe de carcasse (23) qui s'étend de la tringle de talon (21) à une autre tringle de talon (21) et est repliée autour de la tringle de talon (21), et un composant électronique (40), le procédé comprenant les étapes de :
couverture d'au moins une partie du composant électronique (40) par un caoutchouc de revêtement (43) ;
formation d'un évidement (22D) d'une forme correspondant à une forme du caoutchouc de revêtement (43) dans la charge de talon (22) par rasage, moulage par compression et/ou thermoformage ; et
après la formation de l'évidement, agencement d'un caoutchouc de revêtement (43) couvrant au moins une partie du composant électronique (40) dans l'évidement (22D) de la charge de talon (22).

2. Procédé de fabrication du pneu (1) selon la revendication 1, dans lequel le pneu (1) inclut en outre une feuille de caoutchouc (37) qui recouvre une extrémité de pliage (25A) de la nappe de carcasse qui a été repliée,
le procédé comprenant en outre une étape de couverture du caoutchouc de revêtement (43) disposé dans l'évidement (22D) de la charge de caoutchouc (22) par la feuille de caoutchouc (37).

3. Procédé de fabrication du pneu (1) selon la revendication 1 ou 2, comprenant en outre une étape de courbure de l'évidement (22D) formé dans la charge de talon (22), avant l'étape d'agencement.

4. Procédé de fabrication du pneu (1) selon la revendication 1 ou 2, comprenant en outre une étape de courbure de l'évidement (22D) formé dans la charge de talon (22), après l'étape d'agencement.

5. Pneu (1) comprenant : des tringles de talon (21) ; une charge de talon (22) s'étendant vers un côté externe dans une direction radiale du pneu de la tringle de talon (21) ; une nappe de carcasse (23) s'étendant de la tringle de talon (21) à une autre tringle de talon (21), et repliée autour de la tringle de talon (21) ; un composant électronique (40) ;
un caoutchouc de revêtement (43) qui couvre au moins une partie du composant électronique (40) ; et
une feuille de caoutchouc (37) qui couvre une extrémité de pliage (25A) de la nappe de carcasse qui est repliée,
dans lequel un évidement (22D) est formé dans la charge de talon (22),
dans lequel le caoutchouc de revêtement (43) qui couvre au moins une partie du composant électronique (40) est disposé dans l'évidement de la charge de talon (22),
dans lequel le caoutchouc de revêtement (43) disposé dans l'évidement (22D) de la charge de talon (22) est couvert par la feuille de caoutchouc (37) ; et
dans lequel le pneu est fabriqué par le procédé de fabrication selon l'une quelconque des revendications 1 à 4.
